(19) Europäisches Patentamt / European Patent Office / Office européen des brevets

(11) EP 1 049 182 B1

(12) **FASCICULE DE BREVET EUROPEEN**

(45) Date de publication et mention de la délivrance du brevet: **02.01.2008 Bulletin 2008/01**

(51) Int Cl.: ***H01M 4/48*** *(2006.01)* ***H01M 4/58*** *(2006.01)* ***H01M 4/04*** *(2006.01)* ***H01M 4/62*** *(2006.01)*

(21) Numéro de dépôt: **00401207.6**

(22) Date de dépôt: **02.05.2000**

(54) **Matériaux d'électrode présentant une conductivité de surface élevée**

Elektrodenmaterialen mit erhöhter Oberflächenleitfähigkeit

Electrode materials having increased surface conductivity

(84) Etats contractants désignés: **DE FR GB IT**

(30) Priorité: **30.04.1999 CA 2270771**

(43) Date de publication de la demande: **02.11.2000 Bulletin 2000/44**

(60) Demande divisionnaire: **07004289.0 / 1 796 189**

(73) Titulaire: **HYDRO-QUEBEC**
**Montréal**
**Québec H2Z 1A4 (CA)**

(72) Inventeurs:
- **Ravet, Nathalie** **Montreal,** **Québec H3T 1T9 (CA)**
- **Besner, Simon** **Côteau-du-Lac,** **Québec J0P 1B0 (CA)**
- **Simoneau, Martin** **Montreal,** **Québec H2Z 1A4 (CA)**
- **Vallée, Alain** **Montreal,** **Québec H2Z 1A4 (CA)**
- **Armand, Michel** **Montreal,** **Québec H3T 1N2 (CA)**
- **Magnan, Jean-François** **Neuville,** **Québec G0A 2R0 (CA)**

(74) Mandataire: **Sueur, Yvette**
**Cabinet SUEUR et L'HELGOUALCH,**
**109, boulevard Haussmann**
**75008 Paris (FR)**

(56) Documents cités:
**EP-A- 0 612 117** **US-A- 5 789 114**

- **PATENT ABSTRACTS OF JAPAN vol. 015, no. 383 (E-1116), 27 septembre 1991 (1991-09-27) & JP 03 152880 A (MATSUSHITA ELECTRIC IND CO LTD), 28 juin 1991 (1991-06-28)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 049 182 B1

**Description**

## DOMAINE DE L'INVENTION

La présente invention concerne des matériaux d'électrode capables de réaction rédox par échange d'ions alcalins et d'électrons avec un électrolyte. Les applications sont dans le domaine des générateurs électrochimiques (batteries) primaires ou secondaires, les supercapacités et les systèmes de modulation de la lumière de type électrochrome.

## ART ANTÉRIEUR

On connaît les composés d'insertion (ci-après appelés aussi matériaux électroactifs ou matériaux rédox) dont le fonctionnement est basé sur l'échange d'ions alcalins, en particulier les ions lithium, et des électrons de valence d'au moins un élément de transition de manière à assurer la neutralité dans la matrice solide. Le maintien partiel ou total de l'intégrité structurale du matériau permet la réversibilité de la réaction. Les réactions rédox résultant de la formation de plusieurs phases ne sont habituellement pas réversibles, ou très peu. Il est aussi possible d'effectuer des réactions en phase solide en mettant en jeu la scission réversible de liaisons soufre-soufre ou les réactions rédox intervenant dans la transformation de structures organiques aromatiques en formes quinoniques, en particulier dans les polymères conjugués.

Les matériaux d'insertion sont les ingrédients actifs des réactions électrochimiques utilisés en particulier dans les générateurs électrochimiques, les supercapacités ou les systèmes de modulation de la transmission de la lumière (électrochromes).

La progression de la réaction d'échange ions-électrons requiert l'existence au sein du matériau d'insertion d'une double conductivité, simultanément par les électrons et les ions, en particulier les ions lithium, l'un ou l'autre de ces types de conductivité étant éventuellement trop faible pour assurer des cinétiques d'échanges requises pour l'utilisation du matériau, en particulier pour les générateurs électrochimiques ou les supercapacités. Une solution à ce problème est obtenue partiellement par l'utilisation d'électrodes dites "composites", dans lesquelles le matériau d'électrode est dispersé dans une matrice contenant l'électrolyte et un liant polymère. Dans le cas où l'électrolyte est un électrolyte polymère ou un gel fonctionnant en l'absence de solvant, le rôle de liant mécanique est assuré directement par la macromolécule. Par gel, on entend une matrice polymère, elle-même solvatante ou non, retenant un liquide polaire et un sel, de manière à conférer à l'ensemble les propriétés mécaniques d'un solide tout en retenant au moins une partie de la conductivité du liquide polaire. Un électrolyte liquide et le matériau d'électrode peuvent aussi être maintenus en contact par une faible fraction d'un liant polymère inerte, c'est-à-dire n'interagissant pas avec le solvant. Par l'un quelconque des moyens précités, chaque grain de matériau d'électrode est donc entouré d'électrolyte capable d'amener les ions en contact direct avec la quasi-totalité de la surface du matériau d'électrode. Pour faciliter les échanges électroniques, il est habituel, selon l'art antérieur, d'ajouter des particules d'un matériau conducteur à l'un des mélanges précités du matériau électrode et de l'électrolyte. Ces particules sont à l'état très divisé. Généralement, le choix se porte sur les matériaux carbonés, et tout spécialement sur les noirs de carbone (Shawinigan ou Ketjenblack®). Cependant, les fractions volumiques utilisées sont faibles car ce type de matériau modifie fortement la rhéologie des suspensions, spécialement dans les polymères, avec pour résultat une porosité excessive et une perte d'efficacité du fonctionnement de l'électrode composite, aussi bien en termes de fraction de la capacité utilisable que de la cinétique, i.e., de la puissance disponible. Aux faibles taux utilisés, les grains de carbone se structurent en chaînes, et les points de contact avec le matériau d'électrode proprement dit sont extrêmement réduits. Cette configuration a pour conséquence une mauvaise répartition du potentiel électrique au sein du matériau électroactif. En particulier, des surconcentrations ou des appauvrissements peuvent apparaître aux points de jonction triple:

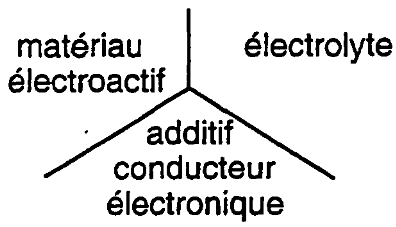


Ces variations excessives de la concentration locale en ions mobiles et les gradients résultant à l'intérieur du matériau électroactif sont très préjudiciables à la réversibilité du fonctionnement de l'électrode sur un nombre élevé de

cycles. Ces contraintes, ou stress, chimiques et mécaniques se traduisent au niveau microscopique par une désintégration des grains de matériau électroactif, dont une partie est susceptible de perdre le contact avec les grains de carbone et de devenir ainsi inactifs électrochimiquement. La structure du matériau peut aussi être détruite, avec l'apparition de nouvelles phases et relargage éventuel des dérivés ou autres fragments de métaux de transition dans l'électrolyte. Ces phénomènes nuisibles apparaissent d'autant plus facilement lorsque la densité de courant ou la puissance demandée à l'électrode est plus grande.

EP-A-0612 117 décrit des batteries qui ont une anode dont la matière active est formée de particules de matériau carboné. Les particules sont obtenues par pyrolyse d'un précurseur de carbone en présence de fines particules de coeur, constituées soit par un composé métallique, soit par un composé d'un tel métal. Lorsque les particules de coeur sont introduites sous forme de particules de composé de métal, ledit composé de métal est décomposé avant que le carbone ne commence à se déposer lors de la pyrolyse du précurseur carboné. Dans les particules ainsi obtenues, la teneur en métal est de préférence de 0,005 à 10 % atomique, la teneur en matériau carboné étant dès lors de 90 à 0,095 % atomique. Le but recherché est l'élaboration de particules de carbone contenant la quantité la plus faible possible de matière non électrochimiquement active, le noyau métallique des particules ne servant que lors de l'élaboration.

US-A-5 789 114 décrit un matériau pour une cathode, constitué par des particules d'un oxyde de métal revêtues par une poudre de carbone, en particulier d'un oxyde de manganèse et d'un oxyde de lithium et d'un second élément choisi parmi Mn, Ni, Fe et Co, ou leurs mélanges. Les particules composites sont obtenues par un procédé consistant à mélanger des particules d'oxyde de métal et une poudre de carbone ayant une surface spécifique d'au moins 150 $m^2/g$ et à appliquer une pression au mélange pour couvrir la surface des particules individuelles d'oxyde de métal par la poudre de carbone de sorte qu'au moins 15% de la surface apparente des particules d'oxyde de métal soit couverte. Dans un tel matériau, le contact entre les poudres solides est un contact ponctuel, et l'intégrité structurale n'est pas préservée lors des cycles charge/décharge.

Une cathode constituée par $Li_{1-x}CoO_2$ ($0<x\leq1$) dont la surface est recouverte par du graphite, à raison de 7-14 parties en poids pour 100 parties en poids de $Li_{1-x}CoO_2$ est décrite dans Patent Abstracts of Japan, vol. 015, n° 383. Le matériau est obtenu par un procédé mécanique d'application, sur $LiCoO_2$, de graphite pyrolytique hautement orienté (Highly Oriented Pyrolytic Graphite). L'élaboration de graphite de type HOPG nécessite des températures d'au moins 1000°C.

## DANS LES DESSINS

La Figure 1 illustre la différence entre une électrode classique selon l'art antérieur (A) et une électrode selon l'invention dont les particules de matériau électroactif sont recouvertes d'un revêtement carboné (B).

Les Figures 2 et 3 illustrent une comparaison d'un échantillon de $LiFePO_4$ recouvert de carbone avec un échantillon témoin de $LiFePO_4$ sans carbone. Ces résultats ont été obtenus par voltammètrie cyclique de piles $LiFePO_4$ / $POE_{20}$LiTFSI / Li cyclées à . 20 $mV.h^{-1}$ entre 3 et 3.7 volts à 80°C. Le premier cycle est porté sur la Figure 2 et le cinquième sur la Figure 3.

La Figure 4 illustre l'évolution de la capacité au cours du cyclage des piles réalisées avec l'échantillon de $LiFePO_4$ carboné d'une part et le témoin non carboné d'autre part.

La Figure 5 illustre les performances d'une pile contenant $LiFePO_4$ carboné et cyclée en mode intentiostatique entre 3 et 3.8 Volts à 80°C avec une vitesse de charge et décharge correspondant à C/l.

La Figure 6 illustre l'évolution du courant en fonction du temps d'une pile $LiFePO_4$ / $\gamma$-butyrolactone LiTFSI / Li contenant un échantillon carboné et cycié à 20 $mV.h^{-1}$ entre 3 et 3.7 volts à température ambiante.

La Figure 7 illustre l'évolution du courant en fonction du temps d'une pile $LiFePO_4$ / $POE_{20}$LiTFSI / Li contenant un échantillon carboné.

Les Figures 8-9 présentent une comparaison d'échantillons de $LiFePO_4$ recouverts de carbone avec un échantillon témoin de $LiFePO_4$ avant traitement. Ces résultats ont été obtenus par voltammètrie cyclique de piles $LiFePO_4$ / $POE_{20}$LiTFSI / Li cyclées à 20 $mV.h^{-1}$ entre 3 et 3.7 volts à 80°C. Le premier cycle est illustré sur la Figure 8 et le cinquième sur la Figure 9.

La Figure 10 illustre l'évolution de la capacité au cours du cyclage des piles réalisées avec les échantillons de $LiFePO_4$ carbonés d'une part et le témoin non carboné d'autre part.

## SOMMAIRE DE L'INVENTION

La présente invention concerne un matériau d'électrode selon la revendication 1.

Le matériau carboné conducteur est déposé à la surface du matériau d'une manière homogène de façon à obtenir une distribution substantiellement régulière du champ électrique à la surface des grains du matériau. La similarité

des rayons ioniques entre l'oxygène, le fluor et l'azote permet le remplacement mutuel de ces éléments en autant que l'électroneutralité est maintenue. Pour des raisons de simplification, et considérant que l'oxygène est utilisé le plus fréquemment, ces matériaux seront appelés des oxydes complexes. Les métaux de transition préférentiels comprennent le fer, le manganèse, le vanadium, le titane, le molybdène, le niobium, le zinc et le tungstène, seuls ou en mélanges. Les métaux autre qu'un métal de transition préférentiels comprennent le magnésium ou l'aluminium, et les non-métaux préférentiels comprennent le soufre, le sélénium, le phosphore, l'arsenic, le silicium, le germanium, le bore et l'étain, seuls ou en mélanges.

Dans une mise en oeuvre préférentielle, la teneur massique finale en matériau carboné est comprise entre 0.1 et 55%, et plus préférablement entre 0.2 à 15%.

Dans une autre mise en oeuvre préférentielle, l'oxyde complexe comprend les sulfates, phosphates, silicates, oxysulfates, oxyphosphates et oxysilicates, ou leurs mélanges, d'un métal de transition et de lithium, et leurs mélanges. Il peut être intéressant, pour des raisons de stabilité structurale, de substituer partiellement le métal de transition par un élément de même rayon ionique mais inactif au point de vue rédox. Par exemple, le magnésium et l'aluminium, dans des proportions préférentielles de 1 à 25%.

L'invention comprend en outre une cellule électrochimique dans laquelle au moins une électrode est fabriquée à partir d'un matériau d'électrode selon l'invention. La cellule peut opérer comme batterie primaire ou secondaire, super capacité, ou système de modulation de la lumière, la batterie primaire ou secondaire étant le mode d'opération préférentiel.

## DESCRIPTION DÉTAILLÉE DE L'INVENTION

La présente invention permet la réalisation de matériaux d'électrode de compositions extrêmement variées dont la caractéristique est d'être revêtus en surface, ou sur la plus grande partie de la surface, d'un revêtement uniforme de matériau carboné conducteur déposé par pyrolyse. La présence dans les matériaux d'électrode de l'invention d'un revêtement uniforme en comparaison du contact ponctuel obtenu avec les poudres de carbone ou d'autres additifs conducteurs de l'art antérieur permet une distribution régulière du champ électrique à la surface des grains du matériau électroactif. De plus, les gradients de concentration des ions sont diminués considérablement. Cette meilleure distribution de la réaction électrochimique à la surface des particules permet d'une part de préserver l'intégrité structurale du matériau, et d'autre part améliore la cinétique, en terme de densité de courant et de puissance disponible à l'électrode, grâce à la plus grande surface offerte.

Par matériau carboné, on entend un polymère solide contenant majoritairement du carbone, de 60 à 100% molaire, et possédant une conductivité électronique supérieure à $10^{-5}$ $Scm^{-1}$ à température ambiante, de préférence supérieure à $10^{-3}$ $Scm^{-1}$. Les autres éléments présents peuvent être l'hydrogène, l'oxygène, l'azote, en autant qu'ils n'interfèrent pas avec l'inertie chimique propre au carbone pendant les procédés électrochimiques. Le matériau carboné peut être obtenu par décomposition thermique, e.g., oxydation partielle, de divers composés organiques. En général, tout matériau menant, grâce à une réaction ou une séquence de réactions, à un matériau carboné solide ayant les propriétés souhaitables sans affecter la stabilité de l'oxyde complexe, représente un précurseur acceptable. Des précurseurs acceptables comprennent, sans limitation, les hydrocarbures et leurs dérivés, particulièrement les espèces polycycliques aromatiques telles que le goudron ou le brai, le pérylène et ses dérivés, les composés polyhydriques comme les sucres et les hydrates de carbone, leurs dérivés, et les polymères. Des exemples préférentiels de polymères incluent les polyoléfines, les polybutadiènes, l'alcool polyvinylique, les produits de condensation des phénols, y compris ceux obtenus à partir de réaction avec des aldéhydes, les polymères dérivés de l'alcool furfurylique, les polymères dérivés du styrène, du divinylbenzène, du naphtalène, du pérylène, de l'acrylonitrile, et de l'acétate de vinyle; la cellulose, l'amidon et leurs esters et éthers, et leurs mélanges.

L'amélioration de la conductivité à la surface des grains obtenue par le revêtement de matériau carboné selon la présente invention permet le fonctionnement satisfaisant d'électrodes contenant des matériaux électroactifs dont la conductivité électronique est insuffisante pour obtenir des performances acceptables. Les oxydes complexes ayant des couples rédox situés dans des intervalles de voltage utiles et/ou comprenant des éléments peu dispendieux et non toxiques, mais dont la conductivité est trop basse pour des usages pratiques, deviennent utiles comme matériau d'électrode lorsque le revêtement conducteur est présent. Le choix des structures ou mélanges de phases possédant des propriétés rédox mais dont la conductivité électronique est trop faible, est beaucoup plus large que celui des composés de l'art antérieur, de type oxyde mixte de métaux de transition et de lithium. Il est en particulier possible d'inclure dans les structures rédox un ou plusieurs des éléments choisis parmi les non-métaux (métalloïdes) tels que le soufre, le sélénium, le phosphore, l'arsenic, le silicium ou le germanium, dont l'électronégativité plus grande permet de moduler le potentiel rédox des éléments de transition, mais au dépens de la conductivité électronique. Un effet similaire est obtenu par une substitution partielle ou totale des atomes d'oxygène par le fluor ou l'azote.

Les matériaux d'électrode ou rédox sont ainsi décrits par la formule générale $A_aM_mZ_zO_oN_nF_f$ dans laquelle:

A comprend un métal alcalin tels que Li, Na, K;
M comprend au moins un métal de transition, et optionnellement un métal autre qu'un métal de transition, tel que le magnésium ou l'aluminium;
Z comprend au moins un non-métal tel que S, Se, P, As, Si, Ge;
O est l'oxygène;
N est l'azote et F est le fluor, ces derniers éléments pouvant se substituer à l'oxygène dans l'oxyde complexe du fait des rayons ioniques voisins des ions $F^-$, $O^{2-}$ et $N^{3-}$ et
$a > 0$, $m \geq 0$, $z > 0$, $o > 0$, $n \geq 0$ et $f \geq 0$, chacun des coefficients a, m, z, o, n et f étant choisi de façon indépendante, de manière à assurer l'électroneutralité du matériau.

Les oxydes préférentiels selon la présente invention comprennent ceux de formules $Li_{1+x}MP_{1-x}Si_xO_4$; $Li_{1+x-y}MP_{1-x}Si_xO_{4-y}F_y$; $Li_{3-x+z}M_2(P_{1-x-z}S_xSi_zO_4)_3$; ou $Li_{3+ux+z}V_{2-z-w}Fe_uTi_w(P_{1-x-z}S_xSi_zO_4)_3$ dans lesquelles $w \leq 2$; $0 \leq x$; $y \leq 1$; $z \leq 1$ et M comprend Fe **ou** Mn.

Le revêtement carboné est déposé par une méthode préférée qui consiste à pyrolyser une matière organique, de préférence riche en carbone, en présence du matériau rédox. Sont particulièrement avantageux les mésomolécules et polymères susceptibles de former facilement, soit mécaniquement, soit par imprégnation à partir d'une solution ou par polymérisation *in situ*, une couche uniforme à la surface des grains du matériau rédox. Une pyrolyse de l'ensemble permet d'obtenir une couche fine et uniforme de matériau carboné à la surface des grains du matériau rédox. Afin que la composition de ce dernier ne soit pas affectée par la réaction de pyrolyse, il est judicieux de choisir des compositions dont la pression d'oxygène libérée par le matériau soit suffisamment faible pour éviter l'oxydation du carbone formé par la pyrolyse. L'activité de l'oxygène des composés $A_aM_mZ_zO_oN_nF_f$ peut être contrôlée par la teneur en métal alcalin, qui elle-même détermine l'état d'oxydation du ou des éléments de transition contenus dans le matériau et fait partie intégrale de l'invention. Sont particulièrement intéressants les compositions dans lesquelles le coefficient "a" de la teneur en métal alcalin permet de maintenir les états d'oxydation suivant: $Fe^{2+}$, $Mn^{2+}$, $V^{2+}$, $V^{3+}$, $Ti^{2+}$, $Ti^{3+}$, $Mo^{3+}$, $Mo^{4+}$, $Nb^{3+}$, $Nb^{4+}$, $W^{4+}$. D'une manière générale, des pressions d'oxygène de l'ordre $10^{-20}$ bars à 0°C et de $10^{-10}$ bars à 900°C sont suffisamment faibles pour permettre le dépôt de carbone par pyrolyse, la cinétique de formation de carbone en présence de résidu hydrocarbonés dus à la pyrolyse étant plus rapide et moins fortement activée que la formation d'oxygène à partir du matériau rédox. Il est aussi possible et avantageux de choisir des matériaux dont la pression d'oxygène en équilibre avec le matériau soit inférieure à celle de l'équilibre

$$C + O_2 \Leftrightarrow CO_2$$

Dans ce cas, le matériau carboné peut être thermodynamiquement stable vis-à-vis de l'oxyde complexe. Les pressions correspondantes sont obtenues par la formule suivante:

$$\ln P(O_2) = \ln P(CO_2) = \frac{94050}{R(273{,}2 + \theta)}$$

dans laquelle R est la constant des gaz parfaits (1,987 cal.mole$^{-1}$.K$^{-1}$); et
θ est la température en °C.

Le tableau suivant donne les valeurs des pressions d'oxygène pour quelques températures:

| θ(°C) | $P(O_2)$ $P(CO_2)$ = 1 atm | $P(CO_2)$ $P(CO_2) = 10^{-5}$ atm |
|---|---|---|
| 200 | $3.5 \times 10^{-44}$ | $3.5 \times 10^{-49}$ |
| 300 | $1.4 \times 10^{-36}$ | $1.4 \times 10^{-41}$ |
| 400 | $2.9 \times 10^{-31}$ | $2.9 \times 10^{-36}$ |
| 500 | $2.5 \times 10^{-27}$ | $2.5 \times 10^{-32}$ |
| 600 | $2.9 \times 10^{-24}$ | $2.5 \times 10^{-29}$ |
| 700 | $7.5 \times 10^{-22}$ | $7.5 \times 10^{-27}$ |
| 800 | $7.0 \times 10^{-20}$ | $7.0 \times 10^{-25}$ |

(suite)

| θ(°C) | $P(O_2)$ $P(CO_2)$ = 1 atm | $P(CO_2)$ $P(CO_2) = 10^{-5}$ atm |
|---|---|---|
| 900 | $3.0 \times 10^{-18}$ | $3.0 \times 10^{-23}$ |

Il est aussi possible d'effectuer le dépôt carboné par la dismutation de l'oxyde de carbone à des températures inférieures à 800°C selon l'équation:

$$2CO \Rightarrow C + CO_2$$

Cette réaction est exothermique mais lente. Les particules d'oxyde complexe peuvent être mises en contact avec le monoxyde de carbone pur ou dilué par un gaz inerte, à des températures allant de 100 à 750°C, de préférence de 300 à 650°C. Avantageusement, la réaction est conduite en technique de lit fluidisé, de manière à avoir une grande surface d'échange entre la phase gazeuse et la phase solide. Les éléments et cations des métaux de transition présents dans l'oxyde complexe sont des catalyseurs de la réaction de dismutation. Il peut être intéressant d'ajouter des faibles quantités de sels de métaux de transition, préférablement le fer, nickel, cobalt à la surface des grains, ces éléments étant particulièrement actifs comme catalyseur de la réaction de dismutation. On peut aussi faire appel à la décomposition d'hydrocarbures en phase gazeuse, tel que les alcanes, ou de préférence ceux riches en carbone, tels que les alcène, les alcynes ou les hydrocarbures aromatiques.

Dans une variante, le dépôt de matériau carboné peut être effectué simultanément à une variation de la composition en métaux alcalins A. Pour ce faire, un sel d'un acide ou d'un polyacide organique est mélangé avec l'oxyde complexe. Une autre possibilité consiste à partir d'un monomère ou d'un mélange de monomères qui sont polymérisés *in situ*. Par pyrolyse, le composé dépose un film de matériau carboné à la surface et le métal alcalin A est incorporé selon l'équation:

$$A_{a'}M_mZ_zO_oN_nF_f + A_{a-a'}C_cO_oR' \Rightarrow A_aM_mZ_zO_oN_nF_f$$

R' étant un radical organique quelconque, éventuellement faisant partie d'une trame polymère.

Parmi les composés susceptibles de permettre cette réaction, on peut citer d'une manière non limitante les sels d'acide carboxyliques tels que les sels des acides oxalique, malonique, succinique, citrique, polyacrylique, polyméthacrylique, benzoique, phtalique, propiolique, acétylène dicarboxylique, naphtalène di- ou tétracarboxylique, pérylène tétracarboxylique, diphénique.

Il est évident que la pyrolyse d'un matériau organique ne contenant pas d'élément alcalin et l'apport de ce dernier par un sel peuvent être combiné afin d'arriver à la stoechiométrie désirée de l'oxyde complexe.

Il est aussi possible d'obtenir un dépôt de matériau carboné, spécialement à des températures basses ou moyennes, inférieures à 400°C par réduction de liaisons carbone-halogène selon l'équation:

$$CY\text{-}CY + 2e^- \Rightarrow \text{-}C{=}C\text{-} + 2Y^-$$

où Y représente un halogène ou un pseudo-halogène. Par pseudo-halogène, on entend un radical organique ou inorganique susceptible d'exister sous forme d'ion $Y^-$ et de former le composé protoné correspondant HY. Parmi les halogènes et pseudo-halogènes, on peut citer d'une manière non limitante F, Cl, Br, I, CN, SCN, CNO, OH, $N_3$, $RCO_2$, $RSO_3$ où R représente H ou un radical organique. La formation par réduction de liaison CY est préférablement effectuée en présence d'éléments réducteurs, par exemple l'hydrogène, le zinc, le magnésium les ions $Ti^{3+}$, $Ti^{2+}$, $Sm^{2+}$, $Cr^{2+}$, $V^{2+}$, les tétrakis(dialkylamino éthylène) ou les phosphines. Ces réactifs peuvent éventuellement être obtenus ou régénérés par voie électrochimique. Par ailleurs, il peut être avantageux d'utiliser des catalyseurs augmentant la cinétique de réduction. Sont particulièrement efficaces les dérivés du palladium ou du nickel, en particulier sous forme de complexes avec les phosphines ou les composés azotés tel la 2,2'-bipyridine. D'une manière similaire, ces composés peuvent être générés sous forme active par voie chimique en présence de réducteurs, en particulier ceux précités, ou par voie électrochimique. Parmi les composés susceptibles de générer du carbone par réduction, on peut citer les perhalocarbones, en particulier sous forme de polymères, l'hexachlorobutadiène, l'hexachlorocyclopentadiène.

Un autre moyen de libérer du carbone par un procédé à basse température consiste en l'élimination du composé hydrogéné HY, Y étant tel que défini ci-haut, selon l'équation :

$$\text{-}CH\text{-}CY\text{-} + B \Rightarrow \text{-}C{=}C\text{-} + BHY$$

Parmi les composés susceptibles de générer du carbone par réduction, on peut citer les composés organiques comportant un nombre équivalent d'atomes d'hydrogène et de groupements Y, tels les hydrohalocarbones, en particulier sous forme de polymères, tel que le polyfluorure, polychlorure ou polybromure ou polyacétate de vinylidène, les hydrates de carbones. La déshydro(pseudo)halogénation peut être obtenue à basse température, incluant la température ambiante, par l'action d'une base susceptible de réagir avec le composé HY pour former un sel. À ce titre, on peut citer les bases tertiaires, amines, amidines, guanidines, imidazoles, les bases inorganiques telles que les hydroxydes alcalins, les composés organométalliques se comportant comme des bases fortes telles que $A(N(Si(CH_3)_3)_2$, $LiN[CH(CH_3)_2]_2$ ou le butyl lithium.

Dans les deux dernières méthodes précitées, il peut être avantageux de recuire les matériaux après le dépôt de carbone. Ce traitement permet une amélioration de la structure ou de la cristallinité du carbone. Le traitement peut être effectué à une température variant entre 100 à 1000°C, de préférence entre 100 à 700°C, ce qui permet d'éviter une éventuelle réduction de l'oxyde complexe par le matériau carboné.

D'une manière générale, il est possible d'obtenir des revêtements de matériau carboné uniformes, assurant une conductivité électronique suffisante, c'est-à-dire au moins du même ordre que la conductivité ionique dans le grain d'oxyde. Les revêtements épais permettent d'obtenir une conductivité suffisante pour que le mélange binaire des grains d'oxyde complexe enrobés de matériau carboné avec l'électrolyte, liquide ou polymère ou le liant inerte macromoléculaire destiné à être imbibé d'électrolyte, soit conducteur par simple contact entre les particules. En général, ce comportement peut s'observer à des fractions volumiques comprises entre 10 et 70%.

Il peut être aussi avantageux de choisir des dépôts de matériau carboné suffisamment fin pour ne pas faire obstacle au passage des ions, tout en assurant la répartition du potentiel électrochimique à la surface du grain. Dans ce cas, les mélanges binaires ne possèdent éventuellement pas une conductivité électronique suffisante pour assurer les échanges électroniques avec le support de l'électrode (collecteur de courant). L'ajout d'un tiers composant conducteur électronique, sous forme de poudre fine ou de fibres, permet d'obtenir une conductivité macroscopique satisfaisante et améliore les échanges électroniques avec le support de l'électrode. Les noirs de carbone ou les fibres de carbone sont particulièrement avantageux pour cette fonction, et donnent des résultats satisfaisants à des taux volumiques n'affectant peu ou pas la rhéologie lors de la mise en oeuvre de l'électrode du fait de l'existence d'une conductivité électronique à la surface des grains du matériau d'électrode. Des fractions volumiques de 0.5 à 10% sont particulièrement préférées. Les noirs de carbone de type noir de Shawinigan® ou Ketjenblack® sont préférés. Parmi les fibres de carbone, celles obtenues par pyrolyse de polymères tels que le brai, le goudron, le polyacrylonitrile ainsi que celles obtenues par "cracking" d'hydrocarbures sont préférées.

Il est intéressant, du fait de sa légèreté et de sa malléabilité, d'utiliser l'aluminium comme constituant des collecteurs de courant. Ce métal est néanmoins recouvert d'une couche isolante d'oxyde. Cette couche, qui protège le métal de la corrosion, peut dans certaines conditions augmenter d'épaisseur, ce qui amène une résistance accrue de l'interface, préjudiciable au bon fonctionnement de la cellule électrochimique. Ce phénomène peut être particulièrement gênant et rapide dans le cas où la conductivité électronique serait uniquement assurée, comme dans l'art antérieur, par des grains de carbone ayant un nombre de points de contacts limités. L'utilisation, en conjonction avec l'aluminium, des matériaux d'électrode recouverts d'une couche de matériau carboné conducteur permet d'augmenter la surface d'échange aluminium-électrode. Les effets d'une corrosion de l'aluminium sont ainsi annulés ou à tout le moins significativement minimisés. Il est possible d'utiliser soit des collecteurs d'aluminium sous forme de feuillards ou éventuellement sous forme de métal déployé ou expansé, ce qui permet un gain de poids. Du fait de propriétés des matériaux de l'invention, même dans le cas d'un métal déployé, les échanges électroniques au niveau du collecteur se font sans surcroît notable de la résistance.

Lorsque les collecteurs de courant sont thermiquement stables, il est aussi possible d'effectuer la pyrolyse directement sur le collecteur, de manière à obtenir après dépôt de carbone, un film continu poreux qui peut être infiltré par un liquide conducteur ionique, ou bien par un monomère ou mélange de monomères dont la polymérisation *in situ* génère un électrolyte polymère. La formation de filins poreux dans lesquels le revêtement carboné forme une trame sont aisément obtenus dans le cadre de l'invention par pyrolyse d'un composite polymère-oxyde complexe déposé à l'état de film sur un support métallique.

Lors de la mise en oeuvre du matériau d'électrode de la présente invention dans une cellule électrochimique, préférablement de type batterie primaire ou secondaire, l'électrolyte est un préférablement un polymère, solvatant ou non, optionnellement plastifié ou gélifié par un liquide polaire contenant en solution un ou plusieurs sels métalliques, et préférablement au moins un sel de lithium. Dans un tel cas, le polymère est préférablement formé à partir d'unités oxyéthylène, oxypropylène, acrylonitrile, fluorure de vinylidène, des esters de l'acide acrylique ou métacrylique, les esters de l'acide itaconique avec des groupements alkyles ou oxaalkyles. L'électrolyte peut également être un liquide polaire immobilisé dans un séparateur microporeux tels qu'une polyoléfine, un polyester, des nanoparticules de silice, d'alumine ou d'aluminate de lithium $LiAlO_2$. Des exemples de liquides polaires comprennent les carbonates cycliques ou linéaires, les formiate d'alkyle, les $\alpha$ - $\omega$ alkylethers, oligoéthylène glycols, la N-méthylpyrrolidinone, la $\Upsilon$-butyrolactone, les tétraalakylsulfamides, et leurs mélanges.

Les exemples suivants sont fournis afin d'illustrer certaines mises en oeuvre préférentielles de l'invention, et ne doivent pas être considérés comme en limitant la portée.

Exemple 1

Cet exemple illustre la synthèse d'un matériau de l'invention conduisant directement à un matériau d'insertion recouvert d'un dépôt de carbone.

Le matériau $LiFePO_4$ recouvert d'un dépôt carboné a été synthétisé à partir de vivianite $Fe_3(PO_4)_2 \cdot 8H_2O$ et d'orthophosphate de lithium $Li_3PO_4$ en proportions stoechiométriques selon la réaction:

$$Fe_3(PO_4)_2 \cdot 8H_2O + Li_3PO_4 \Rightarrow 3\ LiFePO_4$$

Une poudre de polypropylène a été ajoutée dans une proportion représentant 3 % du poids de la vivianite. Les quantités pesées de chacun des composants ainsi que la poudre de polypropylène ont été intimement broyées ensemble dans un broyeur à billes de zircone. Le mélange a ensuite été chauffé sous atmosphère inerte d'argon, dans un premier temps à 350°C pendant 3 heures pour déshydrater la vivianite, puis la température a été élevée graduellement jusqu'à 700°C pour cristalliser le matériau et carboniser le polypropylène. La température a été maintenue à 700°C pendant 7 heures. La structure du matériau obtenue a été vérifiée par RX et correspond à celle publiée pour la triphyllite. Le pourcentage de carbone présent dans l'échantillon a été déterminé par analyse élémentaire. À la précision de la mesure, la teneur en carbone est de 0.56 % dans l'exemple présenté. Pour comparaison, un échantillon a été préparé dans les mêmes conditions en omettant la poudre de polypropylène. Cet échantillon présente également une structure cristalline pure de type $LiFePO_4$

Propriétés électrochimiques

Les matériaux préparés ont été testés dans des piles boutons du type CR 2032 à température ambiante et à 80°C.

Test à 80°C

Les cathodes ont été préparées en mélangeant ensemble la poudre du matériau actif avec du noir de carbone (Ketjenblack®) pour assurer l'échange électronique avec le collecteur de courant et du polyoxyde d'éthylène de masse 400 000 utilisé comme agent liant d'une part et conducteur ionique d'autre part. Les proportions en poids sont 35:9:56. De l'acétonitrile est ajouté au mélange pour dissoudre le polyoxyde d'éthylène. Le mélange homogénéisé est ensuite coulé sur un disque d'acier inoxydable de 1.7 $cm^2$. La cathode est séchée sous vide puis transférée en boîte à gants Vacuum Atmosphères, sous atmosphère d'hélium (< 1vpm $H_2O$, $O_2$). Une feuille de lithium (27 $\mu$m) laminée sur un substrat de nickel a été utilisée comme anode. L'électrolyte polymère était composé de polyoxyde d'éthylène de masse 5000000 et de LiTFSI (sel de lithium de la bistrifluorométhanesulfonimide) dans les proportions oxygène des unités oxyéthylène / lithium de 20 : 1.

Les expériences électrochimiques ont été menées à 80°C, température à laquelle la conductivité ionique de l'électrolyte est suffisante, ($2 \times 10^{-3}$ $Scm^{-1}$). Les études électrochimiques ont été réalisées par voltammétrie lente (20 $mV.h^{-1}$) contrôlée par un cycleur de batterie de type Macpile®. Les batteries ont été chargées et déchargées entre 3.7 et 3 Volts.

La Figure 2 présente le premier cycle obtenu pour les matériaux carbonés et non carbonés dont la synthèse est décrite précédemment. Pour l'échantillon non carboné les phénomènes d'oxydation et de réduction s'étendent sur une large plage de potentiel. Pour l'échantillon carboné, les pics sont mieux définis. L'évolution des 2 matériaux au cours des 5 premiers cycles et très différente (Figure 3). Pour l'échantillon recouvert d'un dépôt de carbone, les cinétiques d'oxydation et de réduction sont de plus en plus rapides, ce qui se traduit par des pics de mieux en mieux définis (courants de pics plus élevés et pics plus étroits). En revanche, pour l'échantillon non carboné, les cinétiques apparaissent de plus en plus lente. L'évolution de la capacité de ces deux échantillons est présentée sur la Figure 4. Dans le cas de l'échantillon carboné, la capacité échangée est stable. Elle représente de 94 à 100% de la capacité théorique (170 $mAh.g^{-1}$) suivant les essais. La capacité initiale du matériau non carboné se situe aux alentours de 145 $mAh.g^{-1}$ soit 85 % de la capacité théorique. Pour cet échantillon, la capacité échangée décroît rapidement. Après 5 cycles la batterie a perdu 20% de sa capacité initiale.

L'échantillon carboné a été cyclé en mode intentiostatique entre 3.8 et 3 V avec des régimes de charge et de décharge rapide. Les courants imposés correspondent à un régime en C/1, ce qui signifie que toute la capacité est échangée en 1 heure. Ces résultats de cyclages sont présentés à la Figure 5. Les 5 premiers cycles ont été réalisés en mode voltampérométrique pour activer la cathode et déterminer sa capacité. Dans ce cas, 100% de la capacité

théorique a été échangée durant les premiers cycles voltammétriques et 96% durant les 80 premiers cycles intentiostatiques. Par la suite la capacité décroît lentement et après 1000 cycles, 70% de la capacité (120 $mAh.g^{-1}$) est encore échangée à ce régime. Le cyclage en mode potentiodynamique réalisé après 950 cycles montre qu'en fait, 89% de la capacité initiale est encore disponible à des régimes de décharges plus lents. Cette perte de puissance est associée à l'augmentation de la résistance d'interface lithium/électrolyte polymère. L'allure erratique du paramètre C/D (capacité passée en charge)/(capacité passée en décharge) en fin de cyclage laisse en effet présumer de la formation de dendrites. Ce paramètre est tracé sur la Figure 5.

Test à température ambiante (électrolyte liquide)

Le matériau $LiFePO_4$ recouvert d'un dépôt de carbone a également été testé à température ambiante. Dans ce cas, la cathode composite est préparée en mélangeant le matériau actif avec du noir de carbone et de l'EPDM (préalablement dissout dans du cyclohexane) dans les proportions 85:5:10. Le mélange est étendu sur un collecteur de courant en acier inox en forme de disque de 1.7 $cm^2$, séché sous vide et conservé en boîte à gants sous atmosphère d'hélium. Comme précédemment, le lithium est utilisé comme anode. Les deux électrodes sont séparées par une membrane poreuse de type Celgard™ 2400. L'électrolyte utilisé est une solution de LiTFSI 0.8 molale dans la gamma-butyrolactone.

Les voltampérogrames présentés à la Figure 6 ont été réalisés à température ambiante avec une vitesse de balayage de 20 $inV.h^{-1}$ entre 3 et 3.8 volts. Dans cette configuration, les cinétiques d'oxydation et de réduction apparaissent comme étant beaucoup plus lentes qu'à 80°C. De plus, la batterie perd légèrement en puissance au cours du cyclage. En revanche, la totalité de la capacité théorique est accessible (97.5% cycle 1, 99.4% cycle 5). Elle a été échangée sans perte sur la durée de l'expérience (5 cycles). Il n'est pas exclu que la faible puissance de cette batterie puisse provenir d'une mauvaise imprégnation de l'électrode par l'électrolyte, ce dernier ne mouillant pas le polymère utilisé comme agent liant.

Cet exemple illustre donc que l'amélioration du matériau étudié, en raison de la présence du dépôt de carbone à la surface des grains, porte sur la cinétique, la capacité et la cyclabilité. De plus, son rôle est indépendant de celui du carbone ajouté lors de la préparation des cathodes composites.

Exemple 2

Cet exemple illustre la formation d'un dépôt conducteur carboné à partir d'un gaz de type hydrocarbure. La synthèse décrite dans l'exemple 1 pour la réparation du phosphate double de lithium et de fer a été reprise en omettant la poudre de polypropylène et en remplaçant l'atmosphère inerte du traitement thermique par un mélange de 1 % de propène dans l'azote. Lors du traitement thermique, le propène se décompose pour former un dépôt de carbone sur le matériau en cours de synthèse. L'échantillon obtenu contient 2.5% de carbone, déterminé par analyse chimique. Une voltammétrie cyclique réalisée dans les conditions décrites dans l'exemple 1 sur cet échantillon met en évidence un phénomène important d'activation au cours des premiers cycles (voir Figure 7). L'amélioration des cinétiques s'accompagne dans ce cas d'une augmentation de la capacité réversiblement échangée. Telle que mesurée lors de l'étape de décharge, la valeur de capacité initiale de l'échantillon de $LiFePO_4$ préparé représente 77% de la capacité théorique en tenant compte des 2.5 % de carbone électrochimiquement inactif. Après 5 cycles, cette capacité atteint 91.4%. Le phénomène d'activation observé est relié à l'épaisseur de la couche de carbone éventuellement poreux enrobant les grains et pouvant ralentir la diffusion des cations.

Les exemples 3-5 illustrent le traitement de l'oxyde complexe, en l'occurrence le phosphate double de fer et de lithium $LiFePO_4$, préparé indépendamment par voie thermique, de manière à obtenir un revêtement carboné conducteur.

Exemple 3

L'échantillon de tryphilite $LiFePO_4$ tel que synthétisé précédemment a été analysé. Sa composition massique est : Fe 34.6%, Li 4.2%, P 19.2%, soit un écart à la stoechiométrie d'environ 5%. La poudre à traiter a été imprégnée d'une solution aqueuse de sucrose commercial puis séchée. La quantité de solution a été choisie de manière à correspondre à 10 % du poids de sucrose par rapport au poids du matériau à traiter. L'évaporation de l'eau jusqu'à siccité complète a été faite sous agitation pour obtenir une répartition homogène. L'emploi du sucre représente une mise en oeuvre préférentielle, car il fond avant de se carboniser, ce qui permet de bien enrober les grains. Son rendement relativement faible en carbone après pyrolyse est compensé par son prix peu élevé.

Les traitements thermiques ont été réalisés à 700°C sous atmosphère d'argon). La température a été maintenue pendant 3 heures. Une analyse élémentaire montre que ce produit contient 1.3 % en poids de carbone. Le traitement thermique précédemment décrit conduit à une poudre noire présentant une conductivité électronique de surface mesurable par un simple ohm-mètre commercial. Son éléctroactivité, telle que mesurée sur le 1 er cycle (Figure 8) et le 5ème cycle (Figure 9) de charge-décharge est de 155.9 $mAhg^{-1}$ et 149.8 $mAhg^{-1}$ respectivement, soit 91.7% et 88.1% de la théorie. Ces valeurs sont à comparer à celles du produit non revêtu du dépôt carboné, dont seulement 64% sont électroactifs lors du premier cycle. Après 5 cycles, cette valeur tombe à 37.0% (voir Figure 10).

Exemple 4

Le phosphate double $LiFePO_4$ de l'exemple 3 a été additionné d'acétate de cellulose comme précurseur du revêtement carbone. Ce polymère est connu pour se décomposer avec de bons rendements de carbonisation, soit .de l'ordre de 24 %. Il se décompose entre 200 et 400°C. Au-delà de cette température, le carbone amorphe obtenu se réorganise pour donner une structure de type graphite ce qui est favorable à l'obtention de dépôts de carbone cohérents et très conducteurs. L'acétate de cellulose a été dissout dans de l'acétone dans une proportion correspondant à 5 % du poids de la matière à traiter et séché avant de procéder comme décrit plus haut. La teneur du produit final en carbone est de 1.5%. Le traitement thermique conduit d'une manière similaire à une poudre noire présentant une conductivité électronique de surface. Son éléctroactivité, telle que mesurée sur le 1er cycle (Figure 8) et le 5ème cycle (Figure 9) de charge-décharge est de 152.6 $mAhg^{-1}$ et 150.2 $mAhg^{-1}$ respectivement, soit 89.8% et 88.3 de la théorie. Ces valeurs sont à comparer à celles du produit non revêtu du dépôt carboné, dont seulement 64% sont électroactifs lors du premier cycle. Après 5 cycles, cette valeur tombe à 37.0% (voir Figure 10).

Exemple 5

Le pérylène et ses dérivés sont connus pour donner, après pyrolyse, des carbones de type graphitique du fait de l'existence de cycles condensés dans la molécule de départ. En particulier, l'anhydride de l'acide pérylène-tetracarboxylique se décompose au-delà de 560°C en donnant des revêtements de carbone très couvrants. Cependant, ce produit est présent en solubilité très faible, et leur mélange intime avec l'oxyde complexe, ici aussi $LiFePO_4$ selon l'exemple 3, est difficile à mettre en pratique. Pour résoudre ce problème, a été synthétisé dans une première étape un polymère contenant les groupements pérylène séparés par une chaîne de polyoxyde d'éthylène. Les segments oxyethylène sont choisis suffisamment longs pour agir comme agents de solubilisation des groupements aromatiques dans les solvants organique habituels. Pour cela, on a fait réagir l'anhydride de l'acide 3,4,9,10-perylènetetracarboxylique commercial (Aldrich) est sur la Jeffamine 600 (Hunstmann, USA) à chaud, en suivant la réaction :

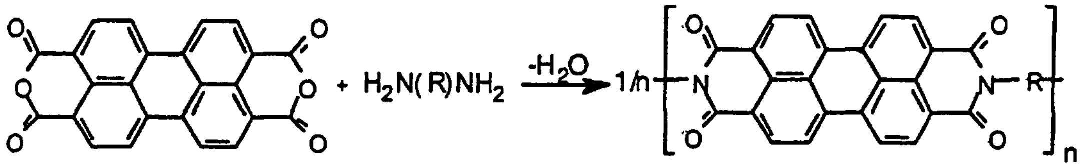


Avec R = $-[CH(CH_3)CH_2O-]p(CH_2CH_2O-)_q[CH_2-CH(CH)_3O]_{p-1}CH_2-CH(CH)_3-$
$1 \leq p \leq 2$; $10 \leq n \leq 14$

La synthèse a été effectuée en 48 heures dans du diméthylacétamide au reflux (166°C). Le polymère formé est précipité dans l'eau, puis séparé par filtration. Il est purifié par une dissolution dans l'acétone, filtration, suivi d'une re-précipitation dans l'éther. Ce processus permet d'éliminer les produits de départ non réagi et les faibles masses. La poudre obtenue est finalement séchée. Le rendement de carbonisation de ce produit est de l'ordre de 20 %.

Ce polymère a été dissout dans du dichlorométhane dans une proportion correspondant à 5 % du poids de la matière à traiter avant de procéder comme décrit aux exemples 3 et 4. La teneur du produit final en carbone est de 1%. Le traitement thermique conduit comme précédemment à une poudre noire conductrice. Son éléctroactivité, telle que mesurée sur le 1 er cycle (Figure 8) et le 5ème cycle (Figure 9) de charge-décharge est de 148 $mAhg^{-1}$ et 146.9 $mAhg^{-1}$, soit 87.4% et 86.4% de la théorie. Ces valeurs sont à comparer à celles du produit non revêtu du dépôt carboné, dont seulement 64% sont électroactifs lors du premier cycle. Après 5 cycles, cette valeur tombe à 37.9 % (voir Figure 10).

Exemple 6

Cet exemple illustre l'utilisation d'une réaction d'élimination à partir d'un polymère pour former un dépôt carboné selon la présente invention.

Du sulfate de fer (ferrique) $Fe_2(SO_4)_3$ ayant une structure "Nasicon" orthorhombique est obtenu à partir de sulfate de fer (III) hydraté commercial (Aldrich) par déshydratation à 450°C sous vide. En refroidissant et sous agitation, la poudre est suspendue dans de l'hexane et lithiée avec une quantité stoechiométrique de butyl lithium 2M pour donner

la composition $Li_{1.5}Fe_2(SO_4)_3$. 20 g de cette poudre blanche sont suspendus dans 100 ml d'acétone et 2.2 g de bromure de poly(vinylidene) $(-CH_2CBr_2)_n$- sont ajoutés et le mélange est traité pendant 12 heures dans un mélangeur à billes comprenant des billes d'alumine. La suspension obtenue est séchée dans un évaporateur rotatif et broyée en une poudre grossière dans un mortier. Le solide est traité avec 3 g de diazabicyclo [5.4.0]unde-7-cène (DBU) dans l'acétonitrile sous reflux pour 3 heures. La poudre noire ainsi obtenue est filtrée pour retirer le bromure d'amine et l'excès de réactif, rincée avec de l'acétonitrile, et séchée sous vide à 60°C. Le dépôt carboné est recuit sous atmosphère d'argon dépourvu d'oxygène (< 1ppm) à 400° pendant 3 heures.

Le matériau recouvert du matériau carboné a été testé pour son activité électrochimique dans une pile au lithium comprenant une électrode de lithium métal, du bis-(trifluorométhanesulfonimide) de lithium 1M dans un mélange 50:50 de carbonate d'éthylène-diméthoxyéthane comme électrolyte immobilisé dans un séparateur de polypropylène microporeux de 25μm. La cathode a été obtenue à partir du matériau rédox préparé avec du noir de carbone (Ketjenblack™) et mis en pâte dans une solution du polymère d'éthylène-propylène-diène, la proportion de solides étant 85:10:5. Le mélange de la cathode est épandu sur un grillage d'aluminium expansé, et pressé à une tonne/$cm^2$ pour donner une épaisseur de 230 μm. Cet assemblage pile bouton est chargé (le matériau testé étant l'anode) à 1 $mAcm^{-2}$ entre des potentiels de 2.8 et 3.9 volts. La capacité du matériau est de 120 $mAgh^{-1}$, correspondant à 89% de la valeur théorique. Le potentiel moyen a été obtenu à 3.6 V vs. $Li^+$:$Li^o$.

Exemple 7

Cet exemple illustre l'utilisation d'un composé comprenant de l'azote comme matériau d'électrode.

Des poudres d'oxyde manganeux MnO et de nitrure de lithium, tous deux commerciaux (Aldrich), sont mélangés dans une boîte sèche sous atmosphère d'hélium dans une proportion 1:1. Les réactifs sont placés dans un creuset de carbone vitreux et traités sous atmosphère d'azote dépourvu d'oxygène (≤ 1vpm) à 800°C. 12 g de l'oxynitrure résultante ayant une structure anti-fluorite $Li_3MnNO$ sont ajoutés à 0.7 g d'une poudre de polyéthylène ayant des particules de l'ordre du micromètre, et mélangés dans un mélangeur à billes sous atmosphère d'hélium dans un contenant en polyéthylène avec de l'heptane sec comme agent de dispersion et 20 mg de Brij™ 35 (ICI) comme surfactant. Le mélange filtré est ensuite traité sous un courant d'azote dépourvu d'oxygène dans un four à 750°C pour décomposer le polyéthylène en carbone.

Le matériau d'électrode recouvert de carbone apparaît sous forme de poudre noire rapidement hydrolysée dans l'air humide. Toutes les manipulations subséquentes sont donc conduites dans une boîte sèche dans laquelle une pile similaire à celle de l'exemple 6 a été construite et testée pour l'activité électrochimique du matériau préparé. L'électrolyte, dans ce cas, est un mélange de tétraéthylsulfamide commercial (Fluka) et de dioxolane dans un rapport volumique 40:60. Les deux solvants ont été purifiés par distillation en présence d'hydrure de sodium (sous pression réduite de 10 torrs dans le cas de la sulfamide). À ce mélange de solvants, est ajouté le bis-(trifluorométhanesulfonimide) de lithium (LiTFSI) pour former une solution de 0.85 molaire. De la même façon que pour l'exemple 6, la cellule comprend une électrode de lithium, un électrolyte immobilisé dans un séparateur en polypropylène poreux de 25 μm, et le matériau préparé de la même manière que dans l'exemple 6.

La cathode est obtenue à partir du matériau rédox préparé en mélange avec le noir de carbone (Ketjenblack™) et mis en pâte dans une solution de polymère éthylène-polypropylène-diène, la proportion de solides étant 90:5:5. Le mélange de la cathode est pressé sur un grillage de cuivre expansé à 1 tonne/$cm^2$ avec une épaisseur résultante de 125 μm. L'assemblage pile bouton est chargé à 0.5 $mAcm^{-2}$ (l'oxynitrure étant l'anode) entre des potentiels de 0.9 et 1.8 volts. La capacité des matériaux est de 370 $mAgh^{-1}$, i.e., 70% de la valeur théorique pour deux électrons par unité de la formule. Le potentiel moyen a été mesuré à 1.1 V vs. $Li^+$:$Li^o$. Ce matériau peut être utilisé comme matériaux d'électrode négative dans des piles de type lithium-ion. Une cellule expérimentale de ce type a été construite avec le matériau d'électrode sur un grillage de cuivre similaire à celui testé précédemment, et un matériau d'électrode positive obtenu par la délithiation chimique du phosphate de fer et lithium de l'exemple 1 en présence de brome dans l'acétonitrile. Le phosphate de fer (III) obtenu est pressé sur un grillage d'aluminium pour former l'électrode positive et la solution de 0.85 M de LiTFSI tétraéthylsulfamide/dioxolane est utilisée comme électrolyte. Le voltage moyen de cette cellule est de 2.1 volts et sa densité d'énergie, basée sur le poids des matériaux actifs, est de 240 Wh/Kg.

Exemple 8

Le phosphosilicate de lithium vanadium (III) $Lh_{3.5}V_2(PO_4)_{2.5}(SiO_4)_{0.5}$, ayant une structure Nasicon, est préparé de la façon suivante.

Du carbonate de lithium (13.85g), du silicate de lithium $Li_2SiO_3$ (6.74 g), du phosphate d'ammonium dihydrogène (43.2 g) et du vanadate d'ammonium (35.1 g) sont mélangés avec 250 mL d'éthylméthylcétone et traités dans un mélangeur à billes comprenant des billes d'alumine et un contenant de polyéthylène à parois épaisses pour 3 jours. La pâte résultante est filtrée, séchée et traitée dans un four tubulaire sous un courant d'azote comprenant 10% d'hydrogène,

à 600°C pendant 12 heures. Après refroidissement, 10 g de la poudre résultante sont introduits dans un mélangeur à billes planétaires comprenant des billes de carbure de tungstène. La poudre résultante est ajoutée à une solution du polymère polyaromatique préparé à l'exemple 5 (polyoxoéthylène-co- pérylènetétracarboxylique diimide, 0.8 g dans 5 mL d'acétone), homogénéisé, et le solvant a été évaporé.

La poudre rouge-brun a été thermolysée dans un courant d'argon dépourvu d'oxygène à 700°C pendant 2 heures, pour donner après refroidissement une poudre noire ayant une conductivité de surface mesurable. Le matériau recouvert du matériau carboné a été testé pour son activité électrochimique dans une pile lithium-ion comprenant une électrode de graphite naturel (NG7) recouverte d'un collecteur de courant de cuivre et correspondant à 24 mg/cm$^2$, de l'hexafluorophosphate de lithium 1 M dans un mélange carbonate d'éthylène: diméthylcarbonate 50:50 comme électrolyte immobilisé dans un séparateur de polypropylène microporeux de 25 $\mu$m. La cathode a été obtenue à partir du phosphosilicate de lithium et vanadium mélangé avec du noir de carbone (Ketjenblack™) et mis en pâte dans une solution de copolymère de fluorure de vinylidène-hexafluoropropène dans l'acétone, les proportions de solides étant 85:10:5. Le mélange de la cathode est épandu sur un grillage d'aluminium expansé et pressé à une tonne/cm$^2$, résultant en une épaisseur de 190 $\mu$m correspondant à une charge de matériau actif de 35 mg/cm$^2$. L'assemblage pile bouton est chargé (le matériau testé étant l'anode) à 1 mAcm$^{-2}$ entre les potentiels de 0 et 4.1 volts. La capacité du matériau recouvert de carbone est de 184 mAgh$^{-1}$, ce qui correspond à 78% de la valeur théorique (3.5 lithium par unité de formule), avec une légère baisse après cyclage. De façon comparative, une cellule similaire construite en utilisant un matériau non recouvert, tel qu'obtenu après mélange du précurseur inorganique traité à la chaleur, mais en omettant l'ajout du polymère de pérylène, démontre une capacité de 105 mAgh$^{-1}$, qui décroît rapidement avec le cyclage.

Exemple 9

Cet exemple illustre la formation d'un revêtement carboné en variant le contenu de métal alcalin dans le matériau redox.

13.54 g de fluorure de fer (III) commercial (Aldrich), 1.8 g de sel de lithium de l'acide hexa-2,4-dyine dicarboxylique sont mélangés dans un mélangeur à billes comprenant un récipient en polyéthylène à parois épaisses et des billes d'alumine, en présence de 100 mL d'acétonitrile. Après 12 heures, la pâte résultante est filtrée et la poudre séchée est traitée par un courant d'azote sec dépourvu d'oxygène dans un four tubulaire à 700°C pendant 3 heures. La poudre noire résultante contient selon l'analyse élémentaire: Fe: 47%, F: 46%, Li: 1.18%, C: 3.5%, ce qui correspond à la formule $Li_{0.2}FeF_3C_{0.35}$. Le matériau d'électrode a été testé pour sa capacité dans une cellule similaire à celle de l'exemple 6 avec la différence que la cellule est d'abord testée en décharge (le matériau d'électrode étant la cathode), et ensuite rechargée. Les voltages étaient compris entre 2.8 et 3.7 volts. La capacité expérimentale lors du premier cycle était de 190 mAgh$^{-1}$, ce qui correspond à 83% de la valeur théorique. En comparaison, une cellule avec $FeF_3$ comme matériau d'électrode et aucun revêtement carboné possède une capacité théorique de 246 mAgh$^{-1}$. En pratique, le premier cycle de décharge obtenu dans les conditions similaires à celle du matériau de l'invention est de 137 mAgh$^{-1}$.

Exemple 10

Cet exemple illustre aussi la formation d'un revêtement carboné en variant le contenu de métal alcalin dans les matériaux redox.

De l'acide polyacrylique commercial de poids moléculaire 15 000 a été dissout pour donner une solution 10% dans un mélange eau/méthanol, et titré avec l'hydroxyde de lithium à un pH de 7. 4 $\mu$L de cette solution ont été séchés dans un creuset à air thermogravimétrique à 80°C pour évaporer l'eau/méthanol. Le chauffage s'est poursuivi à 500°C, donnant un résidu de 0.1895 mg de carbonate de lithium calciné.

18.68 g de phosphate de fer (III) dihydraté commercial (Aldrich), 8.15 g d'oxalate de lithium (Aldrich), 39 mL d'une solution de polyacrylate de lithium, 80 mL d'acétone, et 40 mL de 2,2-diméthoxy acétone capable de piéger l'eau par réaction chimique, sont mélangés dans un mélangeur à billes comprenant un flacon en polyéthylène à parois épaisses et des billes d'alumine. Après 24 heures, la pâte résultante est filtrée et séchée. La poudre obtenue est traitée sous un courant d'azote sec dépourvu d'oxygène dans un four tubulaire à 700°C pendant trois heures, donnant ainsi une poudre noirâtre. Le produit résultant contient, selon l'analyse élémentaire: Fe: 34%, P: 18.8%, Li: 4.4%, C: 3.2%. Une analyse par rayons X a confirmé l'existence de la triphyllite $LiFePO_4$ pure comme seul composé cristallin. Le matériau d'électrode a été testé pour sa capacité dans une cellule similaire à celle de l'exemple 1 avec un électrolyte d'oxyde de polyéthylène, et ensuite rechargé. Les voltages ont été choisis entre 2.8 et 3.7 volts. La capacité expérimentale durant le premier cycle a été de 135 mAgh$^{-1}$, ce qui correspond à 77% de la valeur théorique, qui augmente à 156 mAgh$^{-1}$ (89%) lorsque la définition du pic s'est améliorée après plusieurs cyclages. 80% de cette capacité est accessible dans le domaine de potentiel 3.3 - 3.6 volts vs. $Li^+$: $Li^o$.

Exemple 11

Le composé $LiCo_{0.75}Mn_{0.25}PO_4$ a été préparé en broyant intimement l'oxalate de cobalt dihydraté, l'oxalate de manganèse dihydraté et le phosphate d'ammonium dihydrogéné en injectant de l'air à 850°C pendant 10 heures. La poudre mauve résultante est mélangée dans un mélangeur à billes planétaire comprenant des billes de carbure de tungstène jusqu'à obtention de particules de l'ordre de 4 μm. 10 g de ce phosphate complexe sont triturés dans un mortier avec 10 mL d'une solution 6% du polymère de pérylène de l'exemple 5 dans le formiate de méthyle. Le solvant s'est évaporé rapidement. La poudre résultante a été traitée sous un courant d'argon sec dépourvu d'oxygène dans un four tubulaire à 740°C pendant 3 heures, résultant en une poudre noire. L'activité électrochimique de la cellule a été testée dans une pile lithium-ion similaire à celle de l'exemple 6. L'électrolyte était, dans ce cas, le bis-fluorométhane-sulfonimide de lithium ($Li[FSO_2]_2N$) dissout à une concentration de 1 M dans le diméthylamino-trifluoroéthyl sulfamate $CF_3CH_2OSO_2N(CH_3)_2$, qui est un solvant résistant à l'oxydation. Lorsque chargée initialement, la cellule a montré une capacité de 145 $mAgh^{-1}$ dans la fenêtre de voltage 4.2 - 4.95 V vs. $Li^+:Li^o$. La batterie a pu être cyclée pendant 50 cycles de profondes charges/décharges avec moins de 10% de perte de capacité, montrant ainsi la résistance de l'électrolyte aux hauts potentiels.

Exemple 12

Le composé $Li_2MnSiO_4$ a été préparé par la calcination du gel résultant de l'action d'un mélange stoichiométrique d'acétate de lithium dihydraté, d'acétate de manganèse tétrahydraté et de tétraéthoxysilane dans un mélange éthanol/eau 80:20. Le gel a été séché dans un four à 80°C pendant 48 heures, réduit en poudre et calciné à l'air à 800°C. 3.28 g du silicate résultant et 12.62 g du phosphate de lithium et fer de l'exemple 3 sont mélangés dans un mélangeur à billes planétaire similaire à celui de l'exemple 11, et la poudre a été traitée sous un courant d'argon sec dépourvu d'oxygène dans un four tubulaire à 740°C pendant 6 heures. L'oxyde complexe obtenu après refroidissement possède la formule $Li_{1.2}Fe_{0.8}Mn_{0.2}P_{0.8}Si_{0.2}O_4$. La poudre a été humidifiée avec 3 mL d'une solution 2% d'acétate de cobalt, et séchée. Cette poudre a été traitée dans le même four tubulaire à 500°C sous un courant de 1 mL/s d'un gaz comprenant 10% de monoxyde de carbone dans de l'azote pendant 2 heures. Après refroidissement, la poudre noire résultante a été testée pour son activité électrochimique dans des conditions similaires à celles de l'exemple 1. Avec un électrolyte d'oxyde de polyéthylène à 80°C, la capacité mesurée, à partir d'une courbe cyclique de voltamogramme à 185 $mAgh^{-1}$ (88% de la théorie) entre les voltages de 2.8 et 3.9 volts vs. $Li^+:Li^o$. Le matériau non recouvert testé dans des conditions similaires possède une capacité spécifique de 105 $mAgh^{-1}$.

Exemple 13

Sous argon, 3 g de phosphate de lithium et fer de l'exemple 3 sont suspendus dans 50 mL d'acétonitrile, auquel on ajoute 0.5 g d'hexachlorocyclopentadiène et 10 mg de tétrakis-(triphénylphosphine) nickel(0). Sous une agitation vigoureuse, 1.4 mL de tétrakis(diméthylamino)éthylène sont ajoutés goutte à goutte à la température ambiante. La solution a viré au bleu, et après l'ajout d'agent réducteur supplémentaire, au noir. La réaction est laissée sous agitation pendant 24 heures après la fin de l'addition. Le précipité noir résultant est filtré, lavé avec de l'éthanol et séché sous vide. La recuisson du dépôt de carbone a été réalisée à 400°C sous un courant de gaz dépourvu d'oxygène pendant 3 heures. La poudre noire résultante a été testée pour son activité électrochimique dans les conditions similaires à celles de l'exemple 1. La capacité mesurée entre les voltages de 2.9 et 3.7 volts vs. $Li^+:Li^o$ est de 160 $mAgh^{-1}$ (91% de la théorie). Le matériau non recouvert possède une capacité spécifique de 112 $mAgh^{-1}$ dans les mêmes conditions expérimentales.

Exemple 14

Un système de modulation de la lumière (fenêtre électrochrome) a été construit de la façon suivante.

Le $LiFePO_4$ de l'exemple 3 est mélangé dans un mélangeur à billes de haute énergie jusqu'à obtention de particules de 120 nm environ. 2 g de cette poudre sont mélangés avec 1 mL d'une solution à 2% en poids du polymère de pérylène-co-polyoxyéthylène de l'exemple 5 dans le formiate de méthyle. La pâte est triturée pour s'assurer d'une distribution uniforme du polymère à la surface des particules, et le solvant est ensuite évaporé. La poudre sèche obtenue est traitée sous un courant d'azote sec dépourvu d'oxygène dans un four tubulaire à 700°C pendant 3 heures, pour mener à une poudre grise pâle.

1 g de cette poudre couverte de carbone est mis en pâte dans une solution de 1.2 g d'oxyde de polyéthylène-co-(2-méthylène)propane-1,3-diyl préparée selon J. Electrochem. Soc., 1994, 141(7), 1915 avec des segments d'oxyde d'éthylène d'un poids moléculaire de 1000, 280 mg de LiTFSI et 15 mg de diphénylbenzyle diméthyle acétale comme photoinitiateur dans 10 mL d'acétonitrile. La solution a été enduite en utilisant un procédé "doctor blade" sur un verre

revêtu d'un oxyde d'indium-étain ($20S^{-1}$□) jusqu'à une épaisseur de 8 μm. Après évaporation du solvant, le polymère a été polymérisé avec une lampe UV à 254 nm (200 $mWcm^{-2}$) pendant 3 minutes.

Du trioxyde de tungstène a été déposé par évaporation thermique sur un autre verre recouvert d'oxyde d'indium-étain (ITO) jusqu'à une épaisseur de 340 nm. Ce système a été obtenu en déposant une couche d'électrolyte d'oxyde de polyéthylène (120 μm) avec LiTFSI selon une proportion d'oxygène (du polymère)/sel de 12, précédemment enduit sur un feuillard de polypropylène et appliqué sur une électrode recouverte de $WO_3$ en utilisant la technologie de transfert adhésif. Les deux électrodes de verre ont été pressées ensemble pour former la chaîne électrochimique:

verre/ITO/$WO_3$/PEO-LiTFSI/$LiFePO_4$ électrode composite/ITO/verre

Ce système vire au bleu en 30 secondes sur application d'un voltage (1.5 V, le côté $LiFePO_4$ étant l'anode) et blanchi en voltage inverse. La transmission de lumière est modulée de 85% (état blanchi) à 20% (état coloré).

## Revendications

1. Matériau d'électrode réversible aux ions alcalins et capable de diffuser ces ions, comprenant un oxyde complexe correspondant à la formule générale

$$A_aM_mZ_zO_oN_nF_f$$

dans laquelle :

A représente un métal alcalin;
M représente au moins un métal de transition, et optionnellement un métal autre qu'un métal de transition, ou leurs mélanges; '
Z représente au moins un non-métal;
O est l'oxygène ;
N est l'azote ; et
F est le fluor ;

**caractérisé en ce que** :

- $a > 0$, $m \geq 0$, $z > 0$, $o>0$, $n \geq 0$ et $f \geq 0$, les coefficients a, m, z, o, n et f étant choisi de manière à assurer l'électroneutralité de l'oxyde complexe ;
- l'oxyde complexe comprend un dépôt de matériau carboné conducteur obtenu par pyrolyse d'une matière organique mise en contact avec l'oxyde complexe ou ses précurseurs, ledit revêtement étant différent d'un revêtement par contact ponctuel obtenu avec des poudres de carbone ;
- ledit matériau carboné conducteur présente une intégrité structurale, lors de la réaction électrochimique subie par le matériau d'électrode.

2. Matériau selon la revendication 1, **caractérisé en ce que** l'élément non-métal est choisi parmi le soufre, le sélénium, le phosphore, l'arsenic, le silicium, le germanium, le bore, l'étain, et leurs mélanges.

3. Matériau selon la revendication 2, **caractérisé en ce que** l'oxyde complexe est choisi parmi les sulfates, les phosphates, les silicates, les oxysulfates, les oxyphosphates et les oxysilicates d'un métal de transition et de lithium, et leurs mélanges.

4. Matériau selon l'une des revendications 1 à 3, **caractérisé en ce que** le matériau carboné est un polymère solide contenant de 60 à 100% de carbone, les autres éléments présents étant éventuellement H, O ou N, ledit matériau ayant une conductivité supérieure à $10^{-5}$ $Scm^{-1}$ à température ambiante.

5. Matériau selon l'une des revendications 1 à 4, **caractérisé en ce que** la teneur en matériau carboné est comprise entre 0,1 et 15% en masse.

6. Matériau selon l'une des revendications 1 à 5, **caractérisé en ce que** le métal de transition est choisi parmi le fer, le manganèse, le vanadium, le titane, le molybdène, le niobium, le zinc et le tungstène, et leurs mélanges.

7. Matériau selon l'une des revendications 1 à 6, **caractérisé en ce que** le métal autre qu'un métal de transition est le magnésium ou l'aluminium.

8. Matériau selon la revendication 3, **caractérisé en ce que** le métal de transition est remplacé partiellement par Al ou Mg, et **en ce que** Al ou Mg représente de 1 à **25**%

9. Matériau selon la revendication 1, **caractérisé en ce que** l'oxyde complexe répond à l'une des formules $Li_{1+x}MP_{1-x}Si_xO_4$, $Li_{1+x-y}MP_{1-x}Si_xO_{4-y}F_y$, $Li_{3-x+z}M_2(P_{1-x-z}S_xSi_zO_4)_3$ ou $Li_{3+u-x+z}V_{2-z-w}Fe_uTi_w(P_{1-x-z}S_xSi_zO_4)_3$ dans lesquelles w ≤ 2, 0 ≤ x, y ≤ 1, z ≤ 1 et M représente Fe ou Mn.

10. Matériau selon la revendication 6, **caractérisé en ce que** l'indice a est tel que la teneur en métal alcalin A permet de maintenir les états d'oxydation pour le métal de transition M suivants: $Fe^{2+}$, $Mn^{2+}$, $V^{2+}$, $V^{3+}$, $Ti^{2+}$, $Ti^{3+}$, $Mo^{3+}$, $Mo^{4+}$, $Nb^{3+}$, $Nb^{4+}$, $W^{4+}$.

11. Matériau selon la revendication 1, **caractérisé en ce qu'**il est constitué de particules de $LiFePO_4$ ayant un diamètre de 120 nm environ, comprenant un dépôt de matériau carboné.

12. Matériau selon la revendication 11, **caractérisé en ce qu'**il permet une insertion ou une désinsertion totale d'ions lithium en 30 secondes.

13. Matériau selon la revendication 1, **caractérisé en ce qu'**il contient en outre un composant conducteur électronique.

14. Matériau selon la revendication 13, dans lequel le composant conducteur électronique est un noir de carbone ou une fibre de carbone.

15. Matériau selon la revendication 14, dans lequel la teneur en noir de carbone ou en fibre de carbone est de 0,5 10% en volume.

16. Procédé de préparation d'un matériau selon la revendication 1, **caractérisé en ce qu'**il consiste à mettre en contact un oxyde complexe $A_aM_mZ_zO_oN_nF_f$ avec une matière organique précurseur de matériau carboné, puis à soumettre le précurseur à une pyrolyse.

17. Procédé selon la revendication 16, **caractérisé en ce que** la mise en contact est effectuée par imprégnation de l'oxyde complexe par une solution de mésomolécules ou de polymère.

18. Procédé selon la revendication 16, **caractérisé en ce que** la mise en contact est effectuée par polymérisation in situ d'une mésomolécule.

19. Procédé selon la revendication 16, **caractérisé en ce que** le précurseur est choisi parmi :

   - les hydrocarbures et leurs dérivés, par exemple les espèces polycycliques aromatiques telles que le goudron ou le brai,
   - le pérylène et ses dérivés,
   - les composés polyhydriques, par exemple les sucres et les hydrates de carbone, et leurs dérivés,
   - les polymères, par exemple les polyoléfines, les polybutadiènes, l'alcool polyvinylique, les produits de condensation des phénols, y compris ceux obtenus à partir de réaction avec des aldéhydes, les polymères dérivés de l'alcool furfurylique, les polymères dérivés du styrène, du divinylbenzène, du naphtalène, du pérylène, de l'acrylonitrile, et de l'acétate de vinyle,
   - la cellulose, l'amidon et leurs esters et éthers, et leurs mélanges.

20. Procédé selon la revendication 16, **caractérisé en ce que** la pyrolyse est effectuée sous une pression d'oxygène générée par l'oxyde complexe $A_aM_mZ_zO_oN_nF_f$ allant de $10^{-20}$ bars à 0°C à $10^{-10}$ bars à 900°C.

21. Procédé selon la revendication 16, **caractérisé en ce que** la pression d'oxygène générée par l'oxyde complexe en équilibre avec le matériau carboné est inférieure à la pression d'oxygène de l'équilibre $C + O_2 \Leftrightarrow CO_2$.

22. Procédé selon la revendication 16, **caractérisé en ce que** le précurseur du matériau carboné est CO, et que la pyrolyse est une dismutation de CO à une température inférieure à 800°C, selon l'équation $2\ CO \Rightarrow C + CO_2$.

23. Procédé selon la revendication 22, **caractérisé en ce que** CO est mis en contact avec l'oxyde complexe à l'état pur ou dilué par un gaz inerte.

24. Procédé selon la revendication 22, **caractérisé en ce qu'**un sel de métal de transition est ajouté à l'oxyde complexe, comme catalyseur de dismutation.

25. Procédé selon la revendication 16, **caractérisé en ce que** la pyrolyse est une décomposition thermique d'un précurseur en phase gazeuse, choisi parmi les alcanes, les alcènes, les alcynes et les hydrocarbures aromatiques.

26. Procédé selon la revendication 16, **caractérisé en ce que** le précurseur est une sel d'un acide organique ou d'un polyacide organique du cation $A^+$.

27. Procédé selon la revendication 26, **caractérisé en ce que** le sel est un sel de $A^+$ d'un acide choisi parmi l'acide oxalique, l'acide malonique, l'acide succinique, l'acide citrique, l'acide polyacrylique, l'acide polyméthacrylique, l'acide benzoïque, l'acide phtalique, l'acide propiolique, l'acide acétylène dicarboxylique, l'acide naphtalène di- ou tétracarboxylique, l'acide pérylène tétracarboxylique, et l'acide diphénique.

28. Procédé selon la revendication 16, **caractérisé en ce que** le précurseur du matériau carboné comprend une liaison >CY-CY< dans lequel Y représente un halogène ou un pseudo-halogène, et la pyrolyse est une réaction représentée par l'équation $CY\text{-}CY + 2e^- \Rightarrow \text{-}C{=}C\text{-} + 2Y^-$, effectuée en présence d'un élément réducteur.

29. Procédé selon la revendication 28, **caractérisé en ce que** Y est choisi dans le groupe constitué par F, Cl, Br, I, CN, SCN, CNO, OH, $N_3$, $RCO_2$, $RSO_3$, R représentant H ou un radical organique.

30. Procédé selon la revendication 28, **caractérisé en ce que** l'élément réducteur est choisi parmi l'hydrogène, le zinc, le magnésium, les ions $Ti3^+$, $Ti2^+$, $Sm^{2+}$, $Cr^{2+}$, et $V^{2+}$, les tétrakis(dialkylamino éthylène) ou les phosphines.

31. Procédé selon la revendication 29, **caractérisé en ce que** le précurseur du matériau carboné est un perhalocarbone.

32. Procédé selon la revendication 16, **caractérisé en ce que** le précurseur du matériau carboné comprend une liaison >CH-CY< dans lequel Y représente un halogène ou un pseudo-halogène, et la pyrolyse est une réaction représentée par l'équation $\text{-}CH\text{-}CY\text{-} + B \Rightarrow \text{-}C{=}C\text{-} + BHY$, B étant une base.

33. Procédé selon la revendication 32, **caractérisé en ce que** Y est choisi dans le groupe constitué par F, Cl, Br, I, CN, SCN, CNO, OH, $N_3$, $RCO_2$, $RSO_3$, R représentant H ou un radical organique.

34. Procédé selon la revendication 32, **caractérisé en ce que** la base B est une base tertiaire choisie parmi les amines, les amidines, les guanidines et les imidazoles, les bases inorganiques choisies parmi les hydroxydes alcalins, et les composés organométalliques choisis parmi $AN[Si(CH_3)_3]_2$, $LiN[CH(CH_3)_2]_2$ ou le butyl lithium.

35. Procédé selon la revendication 32, **caractérisé en ce que** le précurseur du matériau carboné est un hydrohalocarbone.

36. Procédé selon la revendication 16, **caractérisé en ce qu'**il consiste à partir d'un monomère ou d'un mélange de monomères et de les polymériser in situ.

37. Procédé selon l'une des revendications 16 à 33, **caractérisé en ce que** l'oxyde complexe est préparé in situ, en présence de la matière organique précurseur du matériau carboné.

38. Procédé selon la revendication 37, **caractérisé en ce que** l'oxyde complexe est $LiFePO_4$.

39. Cellule électrochimique dans laquelle au moins une électrode est constitué par un matériau selon l'une des revendications 1 à 15.

## Claims

1. An electrode material reversible to alkali ions and capable of diffusing said ions, comprising a complex oxide corresponding to the general formula $A_aM_mZ_zO_oN_nF_f$ wherein:

A comprises an alkaline metal;
M comprises at least one transition metal, and optionally a non-transition metal, or mixtures thereof;
Z comprises at least one non-metal;
O is oxygen;
N nitrogen; and
F is fluorine; and

**characterized in that**

$a > 0$, $m \geq 0$, $z > 0$, $o>0$, $n \geq 0$ et $f \geq 0$, the coefficient a, m, z, o, n and f being selected to ensure electro neutrality of the complex oxide
the complex oxide comprises a conductive carbonaceous material deposit obtained by pyrolysis of an organic material brought into contact with the complex oxide or the precursors thereof, said deposit being different from a punctual deposit obtained with carbon powder,
said conducting carbonaceous material having structural integrity when the electrode material undergoes electrochemical reaction.

**2.** The material according to claim 1, wherein the non metal element is selected form sulfur, selenium, phosphorus, arsenic, silicon, germanium, boron, tin, and mixtures thereof.

**3.** The material according to claim 2, wherein the complex oxide is selected from sulfates, phosphates, silicates, oxysulfates, oxyphosphates, oxysilicates of a transition metal and lithium, and mixtures thereof.

**4.** The material according to one of claims 1 to 3, wherein the carbonaceous material is a solid polymer comprising from 60% to 100% of carbon, the other elements optionally present being H, O or N, said material having a conductivity greater than $10^{-5}Scm^{-1}$ at room temperature.

**5.** The material according to one of claims 1 to 4, wherein the carbonaceous material content is between 0,1 and 15% by weight.

**6.** The material according to one of claims 1 to 5, wherein the transition metal is selected from t iron, manganese, vanadium, titanium, molybdenum, niobium, tungsten, zinc and mixtures thereof.

**7.** The material according to one of claims 1 to 6, wherein the metal other than a transition metal is magnesium or aluminum.

**8.** The material according to claim 3, wherein the transition metal is partly replaced with A1 or Mg, and A1 or Mg represents from 1 to 25% by weight.

**9.** The material according to claim 1, wherein the complex oxide has one of the formulae $Li_{1+x}MP_{1-x}Si_xO_4$, $Li_{1+x-y}MP_{1-x}Si_xO_{4-y}F_y$, $Li_{3-x+z}M_2(P_{1-x-z}S_xSi_zO_4)_3$ or $Li_{3+u-x+z}V_{2-z-w}Fe_uTi_w(P_{1-xz}S_xSi_zO_4)_3$ wherein $w \leq 2$, $0 \leq x$, $y \leq 1$, $z \leq 1$ and M represents Fe or Mn.

**10.** The material according to claim 6, wherein the coefficient a is such that the alkali metal content allows to maintain the following oxidation states for the transition metal : $Fe^{2+}$, $Mn^{2+}$, $V^{2+}$, $V^{3+}$, $Ti^{2+}$, $Ti^{3+}$, $Mo^{3+}$, $Mo^{4+}$, $Nb^{3+}$, $Nb^{4+}$, $W^{4+}$.

**11.** The material according to claim 1, **characterized in that** it comprises $LiFePO_4$ particles having a particle size of about 120 nm, comprising a carbonaceous material deposit.

**12.** The material according to claim 11, which is **characterized in that** it allows total insertion or deinsertion of lithium ions within 30 seconds.

**13.** The material according to claim 1, which further comprises an electronically conducting component.

**14.** The material according to claim 13, wherein the electronically conducting component is carbon black or carbon fibre.

**15.** The material according to claim 14, wherein the carbon black or carbon fibre content is 0,5-100% by volume.

**16.** A method for preparing a material according to claim 1, **characterized in that** it consist in contacting a complex oxide $A_aM_mZ_zO_oN_nF_f$ with an organic precursor of a carbonaceous material, and submitting the precursor to pyrolysis.

**17.** The method according to claim 16, wherein contacting is performed by impregnating the complex oxide with a solution of mesomolecules or of a polymer.

**18.** The method according to claim 16, wherein contacting is performed by polymerizing a mesomolecule in situ.

**19.** The method according to claim 16, wherein the precursor is selected from :

- hydrocarbons and their derivatives, (for example polycyclic aromatic moieties, like pitch and tar derivatives,
- perylene and its derivatives;
- polyhydric compounds (for example sugars and carbohydrates and their derivatives),
- polymers, (for example polyolefins, polybutadienes, polyvinylic alcohol, phenol condensation products, including those obtained from reaction with aldehydes, polymers derived from furfurylic alcohol, polymers derivatived from styrene, from divinylbenzene, from naphtalene, from perylene, from acrylonitrile, or from vinyl acetate,
- cellulose, starch and their esters or ethers, and mixtures thereof.

**20.** The method of claim 16, wherein pyrolysis is performed under an oxygen pressure generated by the complex oxide $A_aM_mZ_zO_oN_nF_f$ of from $10^{-20}$ bar at 0°C to $10^{-10}$ bars at 900°C.

**21.** The method according to claim 16, wherein the oxygen pressure generated by the complex oxide in equilibrium with the carbonaceous material is lower than the oxygen pressure of the equilibrium $C + O_2 \Leftrightarrow CO_2$.

**22.** The method according to claim 16, wherein the precursor of the carbonaceous material is CO, and the pyrolysis is a disproportionation of CO at a temperature lower than 800°C, according to the equation $2\ CO \Rightarrow C + CO_2$,

**23.** The method according to claim 22, wherein the complex oxide is contacted with CO in a pure state or in admixture with an inert gas

**24.** The method according to claim 22, wherein a salt of a transition metal is added as a disproportionation catalyst to the complex oxide.

**25.** The method according to claim 16, wherein the pyrolysis is a thermal decomposition of a gaseous precursor, selected from alkanes, alkenes, alkynes and aromatic hydrocarbons.

**26.** The method according to claim 16, wherein the precursor is a salt of an organic acid or polyacid of the cation $A^+$.

**27.** The method according to claim 26, wherein the salt is a salt of $A^+$ of an acid selected from oxalic acid, malonic acid, succinic acid, citric acid, polyacrylic acid, polymethacrylic acid, benzoic acid, phtalic acid, propiolic acid, acetylene dicarboxylic acid, perylene tetracarboxilic acid and diphenic acid.

**28.** the method according to claim 16n, wherein the precursor of the carbonaceous material comprises a >CY-CY< bond wherein Y represents a halogen or a pseudo-halogen, and the pyrolysis is a reaction represented by the equation $CY\text{-}CY + 2e^- \Rightarrow \text{-}C\text{=}C\text{-} + 2Y^-$, carried on in the presence of a reducing element.

**29.** The method according to claim 28, wherein Y is selected from F, Cl, Br, I, CN, SCN, CNO, OH, $N_3$, $RCO_2$, $RSO_3$, R representing H or an organic radical.

**30.** The method according to claim 28, wherein the reducing element is selected from hydrogen, zinc, magnesium, $Ti^{3+}$, $Ti^{2+}$, $Sm^{2+}$, $Cr^{2+}$, et $V^{2+}$, tetrakis(dialkylamino ethylene) or phosphines.

**31.** The method according to claim 29, wherein the precursor of the carbonaceous material is a perhalocarbon.

**32.** The method according to claim 16, wherein the precursor of the carbonaceous material comprises a >CH-CY< bond wherein Y represents a halogen or a pseudo-halogen, and the pyrolysis is a reaction represented by the equation

-CH-CY- + B $\Rightarrow$ -C=C- + BHY, B being a base.

**33.** The method according to claim 28, wherein Y is selected from F, Cl, Br, I, CN, SCN, CNO, OH, $N_3$, $RCO_2$, $RSO_3$, R representing H or an organic radical.

**34.** The method according to claim 32, wherein the bas B is a tertiary base selected from amines, amidines, guanidines, imidazoles, inorganic bases selected from alkali hydroxydes, and organometallic compounds selected from AN[Si $(CH_3)_3]_2$, $LiN[CH(CH_3)_2]_2$ or butyl lithium.

**35.** The method according to claim 32, wherein the precursor of the carbonaceous material is a hydrocarbon.

**36.** The method according to claim 16, **characterized in that** it starts from a monomer or a mixture of monomers which are polymerized in situ.

**37.** The method according to one of claims 16 to 33, wherein the complex oxide is prepared in situ, in the presence of the organic precursor of the carbonaceous material.

**38.** The method according to claim 37, wherein the complex oxide is $LiFePO_4$.

**39.** An electrochemical cell, wherein at least one electrode comprises a material according to a one of claims 1 to 15.

## Patentansprüche

**1.** In Bezug auf Alkalimetallionen reversibles Elektrodenmaterial, das in der Lage ist, diese Ionen zu diffundieren, umfassend ein Komplexoxid der folgenden allgemeinen Formel:

$$A_aM_mZ_zO_oN_nF_f$$

worin:

A für ein Alkalimetall steht;
M für zumindest ein Übergangsmetall und gegebenenfalls für ein anderes Metall als ein Übergangsmetall oder Gemische davon steht;
Z für zumindest ein Nichtmetall steht;
O Sauerstoff ist;
N Stickstoff ist; und
F Fluor ist;

**dadurch gekennzeichnet, dass**:

- $a > 0$, $m \geq 0$, $z > 0$, $o > 0$, $n \geq 0$ und $f \geq 0$ sind, wobei die Koeffizienten a, m, z, o, n und f so ausgewählt sind, dass die Elektroneutralität des Komplexoxids sichergestellt ist;
- das Komplexoxid eine Ablagerung aus einem leitfähigen kohlenstoffhaltigen Material umfasst, die durch Pyrolyse von organischem Material erhalten wird, das mit dem Komplexoxid oder seinen Vorläufern kontaktiert wird, wobei sich die Beschichtung von einer durch Punktkontakt mit Kohlenstoffpulvern erhaltenen Beschichtung unterscheidet;
- das leitfähige kohlenstoffhaltige Material bei der elektrochemischen Reaktion des Elektrodenmaterials Strukturintegrität bewahrt.

**2.** Material nach Anspruch 1, **dadurch gekennzeichnet, dass** das Nichtmetall-Element aus Schwefel, Selen, Phosphor, Arsen, Silicium, Germanium, Bor, Zinn und Gemischen davon ausgewählt ist.

**3.** Material nach Anspruch 2, **dadurch gekennzeichnet, dass** das Komplexoxid aus den Sulfaten, Phosphaten, Silicaten, Oxysulfaten, Oxyphosphaten und Oxysilicaten eines Übergangsmetalls, von Lithium und von Gemischen davon ausgewählt ist.

**4.** Material nach einem der Ansprüche 1 bis 3, **dadurch gekennzeichnet, dass** das kohlenstoffhaltige Material ein

festes Polymer ist, das 60 bis 100 % Kohlenstoff enthält, wobei die anderen enthaltenen Elemente H, O oder N sein können, und das Material bei Raumtemperatur eine Leitfähigkeit von über $10^{-5}$ $S \cdot cm^{-1}$ aufweist.

5. Material nach einem der Ansprüche 1 bis 4, **dadurch gekennzeichnet dass** der Gehalt an kohlenstoffhaltigem Material zwischen 0,1 und 15 Gew.-% liegt.

6. Material nach einem der Ansprüche 1 bis 5, **dadurch gekennzeichnet, dass** das Übergangsmetall aus Eisen, Mangan, Vanadium, Titan, Molybdän, Niob, Zink, Wolfram und Gemischen davon ausgewählt ist.

7. Material nach einem der Ansprüche 1 bis 6, **dadurch gekennzeichnet, dass** das Metall, das kein Übergangsmetall ist, Magnesium oder Aluminium ist.

8. Material nach Anspruch 3, **dadurch gekennzeichnet, dass** das Übergangsmetall teilweise durch Al oder Mg ersetzt ist und Al oder Mg 1 bis 25 % ausmachen.

9. Material nach Anspruch 1, **dadurch gekennzeichnet, dass** das Komplexoxid einer der folgenden Formeln entspricht: $Li_{1+x}MP_{1-x}Si_xO_4$, $Li_{1+x-y}MP_{1x}Si_xO_{4-y}F_y$, $Li_{3-x+z}M_2(P_{1-x-z}S_xSi_zO_4)_3$ oder $Li_{3+u-x+z}V_{2-z-w}Fe_uTi_w(P_{1-x-z}S_xSi_zO_4)_3$, worin gilt: $w \leq 2$, $0 \leq x$, $y \leq 1$, $z \leq 1$, und worin M für Fe oder Mn steht.

10. Material nach Anspruch 6, **dadurch gekennzeichnet, dass** der Index a so gewählt ist, dass der Gehalt an Alkalimetall A eine Beibehaltung folgender Oxidationszustände des Übergangsmetalls M ermöglicht: $Fe^{2+}$, $Mn^{2+}$, $V^{2+}$, $V^{3+}$, $Ti^{2+}$, $Ti^{3+}$, $Mo^{3+}$, $Mo^{4+}$, $Nb^{3+}$, $Nb^{4+}$, $W^{4+}$.

11. Material nach Anspruch 1, **dadurch gekennzeichnet, dass** es aus $LiFePO_4$-Teilchen besteht, die einen Durchmesser von etwa 120 nm aufweisen und eine Ablagerung aus einem kohlenstoffhaltigen Material umfassen.

12. Material nach Anspruch 11, **dadurch gekennzeichnet, dass** es in 30 s eine vollständige Insertion oder Entfernung von Lithiumionen ermöglicht.

13. Material nach Anspruch 1, **dadurch gekennzeichnet, dass** es zusätzlich eine elektrisch leitfähige Komponente enthält.

14. Material nach Anspruch 13, worin es sich bei der elektrisch leitfähigen Komponente um Ruß oder eine Kohlenstofffaser handelt.

15. Material nach Anspruch 14, worin der Gehalt an Ruß oder Kohlenstofffaser 0,5 bis 10 Vol.-% beträgt.

16. Verfahren zur Herstellung eines Materials nach Anspruch 1, **dadurch gekennzeichnet, dass** ein Komplexoxid $A_aM_mZ_zO_oN_nF_f$ mit einem organischen Vorläufermaterial eines kohlenstoffhaltigen Materials kontaktiert wird und der Vorläufer dann einer Pyrolyse unterzogen wird.

17. Verfahren nach Anspruch 16, **dadurch gekennzeichnet, dass** das Kontaktieren durch Imprägnieren des Komplexoxids mit einer Mesomolekül- oder Polymerlösung erfolgt.

18. Verfahren nach Anspruch 16, **dadurch gekennzeichnet, dass** das Kontaktieren durch In-situ-Polymerisation eines Mesomoleküls erfolgt.

19. Verfahren nach Anspruch 16, **dadurch gekennzeichnet, dass** der Vorläufer aus folgenden ausgewählt ist:

- Kohlenwasserstoffen und ihren Derivaten, beispielsweise polyzyklischen Aromaten-Spezies, wie z.B. Teer und Pech,
- Perylen und seinen Derivaten,
- Verbindungen mit mehreren Hydroxylgruppen, beispielsweise Zuckern und Kohlenhydraten, sowie ihren Derivaten,
- Polymeren, beispielsweise Polyolefinen, Polybutadienen, Polyvinylalkohol, Kondensationsprodukten von Phenolen, einschließlich jener, die durch Reaktion mit Aldehyden erhalten werden, von Furfurylalkohol abgeleiteten Polymeren, von Styrol, Divinylbenzol, Naphthalin, Perylen, Acrylnitril und Vinylacetat abgeleiteten Polymeren,
- Cellulose, Stärke und deren Estern und Ethern sowie Gemischen davon.

20. Verfahren nach Anspruch 16, **dadurch gekennzeichnet, dass** die Pyrolyse unter einem vom Komplexoxid $A_aM_mZ_zO_oN_nF_f$ erzeugten Sauerstoffdruck im Bereich von $10^{-20}$ bar bei 0 °C bis $10^{-10}$ bar bei 900 °C erfolgt.

21. Verfahren nach Anspruch 16, **dadurch gekennzeichnet, dass** der vom Komplexoxid im Gleichgewicht mit dem kohlenstoffhaltigen Material erzeugte Sauerstoffdruck geringer ist als der Sauerstoffdruck des Gleichgewichts $C + O_2 \Leftrightarrow CO_2$.

22. Verfahren nach Anspruch 16, **dadurch gekennzeichnet, dass** es sich bei dem Vorläufer des kohlenstoffhaltigen Materials um CO handelt und dass die Pyrolyse eine Disproportionierung von CO bei einer Temperatur von unter 800 °C gemäß der Gleichung $2\ CO \Leftrightarrow C+CO_2$ ist.

23. Verfahren nach Anspruch 22, **dadurch gekennzeichnet, dass** CO mit dem Komplexoxid in unverdünntem oder in mit einem Inertgas verdünntem Zustand kontaktiert wird.

24. Verfahren nach Anspruch 22, **dadurch gekennzeichnet, dass** ein Übergangsmetallsalz als Disproportionierungskatalysator zum Komplexoxid zugesetzt wird.

25. Verfahren nach Anspruch 16, **dadurch gekennzeichnet, dass** es sich bei der Pyrolyse um eine thermische Zersetzung eines Vorläufers in der Gasphase handelt, wobei dieser aus Alkanen, Alkenen, Alkinen und aromatischen Kohlenwasserstoffen ausgewählt ist.

26. Verfahren nach Anspruch 16, **dadurch gekennzeichnet, dass** der Vorläufer ein Salz einer organischen Säure oder einer organischen Polysäure mit dem Kation $A^+$ ist.

27. Verfahren nach Anspruch 26, **dadurch gekennzeichnet, dass** es sich bei dem Salz um ein Salz von $A^+$ mit einer Säure handelt, die aus Oxalsäure, Malonsäure, Bernsteinsäure, Zitronensäure, Polyacrylsäure, Polymethacrylsäure, Benzoesäure, Phthalsäure, Propiolsäure, Acetylendicarbonsäure, Naphthalindi- oder -tetracarbonsäure, Perylentetracarbonsäure und Diphensäure ausgewählt ist.

28. Verfahren nach Anspruch 16, **dadurch gekennzeichnet, dass** der Vorläufer des kohlenstoffhaltigen Materials eine Bindung >CY-CY< aufweist, worin Y für ein Halogen oder ein Pseudohalogen steht, und die Pyrolyse eine durch die Gleichung $CY\text{-}CY + 2e^- \Rightarrow -C{=}C- + 2Y^-$ dargestellte Reaktion ist, die in Gegenwart eines Reduktionsmittels durchgeführt wird.

29. Verfahren nach Anspruch 28, **dadurch gekennzeichnet, dass** Y aus der aus F, Cl, Br, I, CN, SCN, CNO, OH, $N_3$, $RCO_2$ und $RSO_3$ bestehenden Gruppe ausgewählt ist, wobei R für H oder einen organischen Rest steht.

30. Verfahren nach Anspruch 28, **dadurch gekennzeichnet, dass** das Reduktionsmittel aus Wasserstoff, Zink, Magnesium, den Ionen $Ti^{3+}$, $Ti^{2+}$, $Sm^{2+}$, $Cr^{2+}$ und $V^{2+}$, Tetrakis(dialkylaminoethylen) oder Phosphinen ausgewählt ist.

31. Verfahren nach Anspruch 29, **dadurch gekennzeichnet, dass** es sich bei dem Vorläufer des kohlenstoffhaltigen Materials um einen perhalogenierten Kohlenwasserstoff handelt.

32. Verfahren nach Anspruch 16, **dadurch gekennzeichnet, dass** der Vorläufer des kohlenstoffhaltigen Materials eine Bindung >CH-CY< aufweist, worin Y für ein Halogen oder ein Pseudohalogen steht, und die Pyrolyse eine durch die Gleichung $-CH\text{-}CY- + B \Rightarrow -C{=}C- + BHY$ dargestellte Reaktion ist, wobei B eine Base ist.

33. Verfahren nach Anspruch 32, **dadurch gekennzeichnet, dass** Y aus der aus F, Cl, Br, I, CN, SCN, CNO, OH, $N_3$, $RCO_2$ und $RSO_3$ bestehenden Gruppe ausgewählt ist, wobei R für H oder einen organischen Rest steht.

34. Verfahren nach Anspruch 32, **dadurch gekennzeichnet, dass** es sich bei der Base B um eine tertiäre Base, die aus Aminen, Amidinen, Guanidinen und Imidazolen ausgewählt ist, anorganische Basen, die aus Alkalimetallhydroxiden ausgewählt sind, und organometallische Verbindungen, die aus $AN[Si(CH_3)_3]_2$, $LiN[CH(CH_3)_2]_2$ oder Butyllithium ausgewählt sind, handelt.

35. Verfahren nach Anspruch 32, **dadurch gekennzeichnet, dass** der Vorläufer des kohlenstoffhaltigen Materials ein halogenierter Kohlenwasserstoff ist.

36. Verfahren nach Anspruch 16, **dadurch gekennzeichnet, dass** es darin besteht, von einem Monomer oder einem Monomergemisch auszugehen und dieses in situ zu polymerisieren.

37. Verfahren nach einem der Ansprüche 16 bis 33, **dadurch gekennzeichnet, dass** das Komplexoxid in situ in Gegenwart des organischen Vorläufermaterials des kohlenstoffhaltigen Materials hergestellt wird.

38. Verfahren nach Anspruch 37, **dadurch gekennzeichnet, dass** es sich bei dem Komplexoxid um $LiFePO_4$ handelt.

39. Elektrochemische Zelle, in der zumindest eine Elektrode aus einem Material nach einem der Ansprüche 1 bis 15 besteht.

FIGURE 1

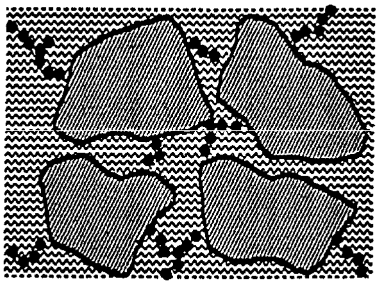

a)

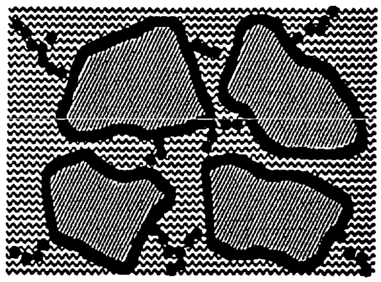

b)

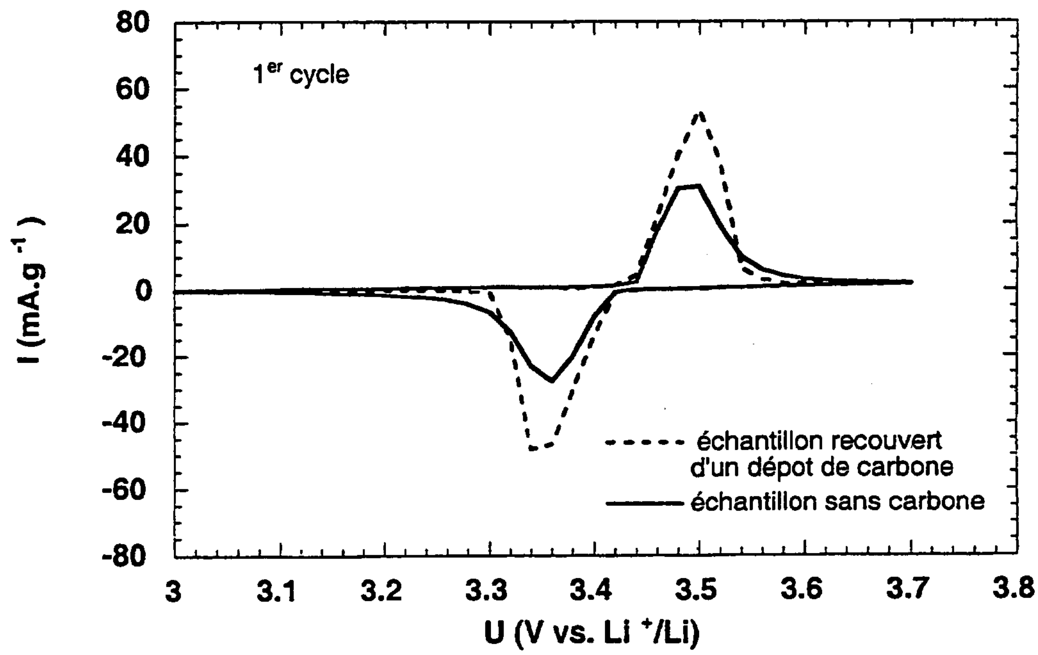


**Figure 2**

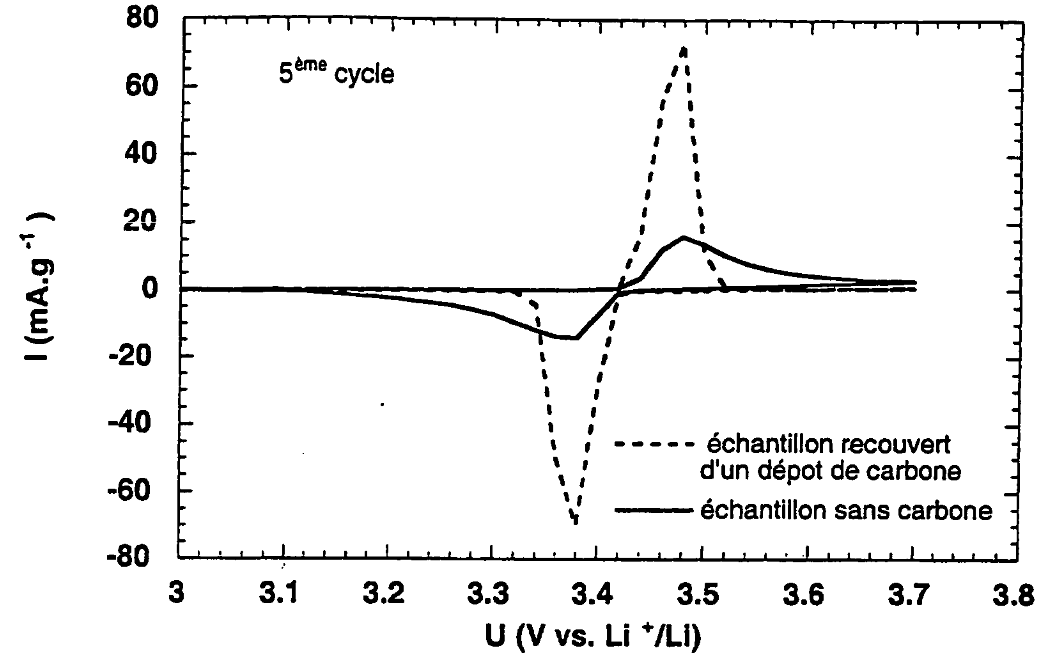


Figure 3

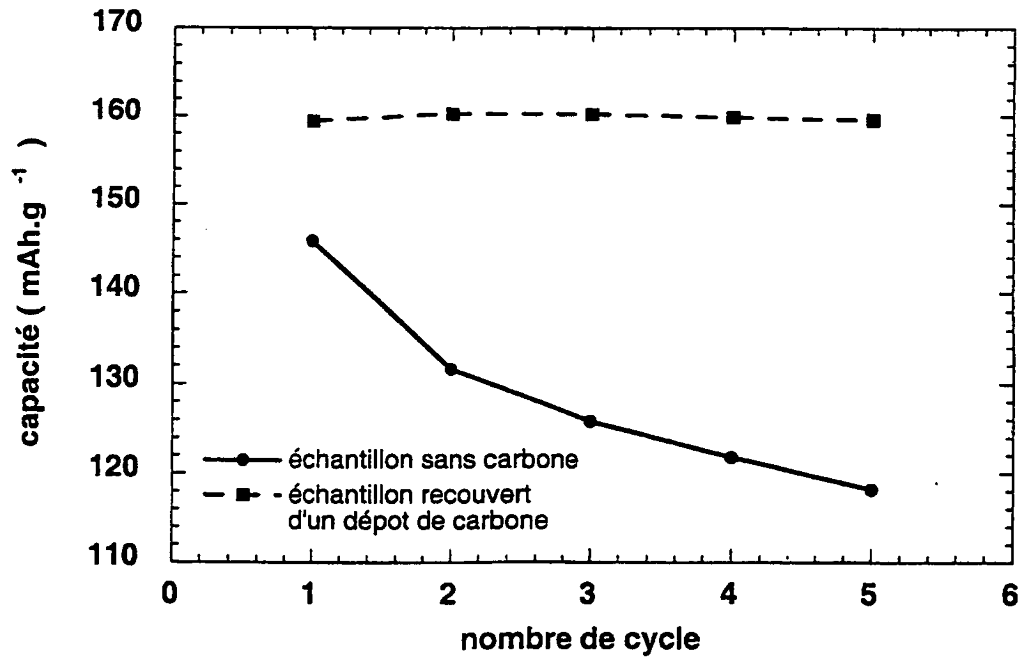


Figure 4

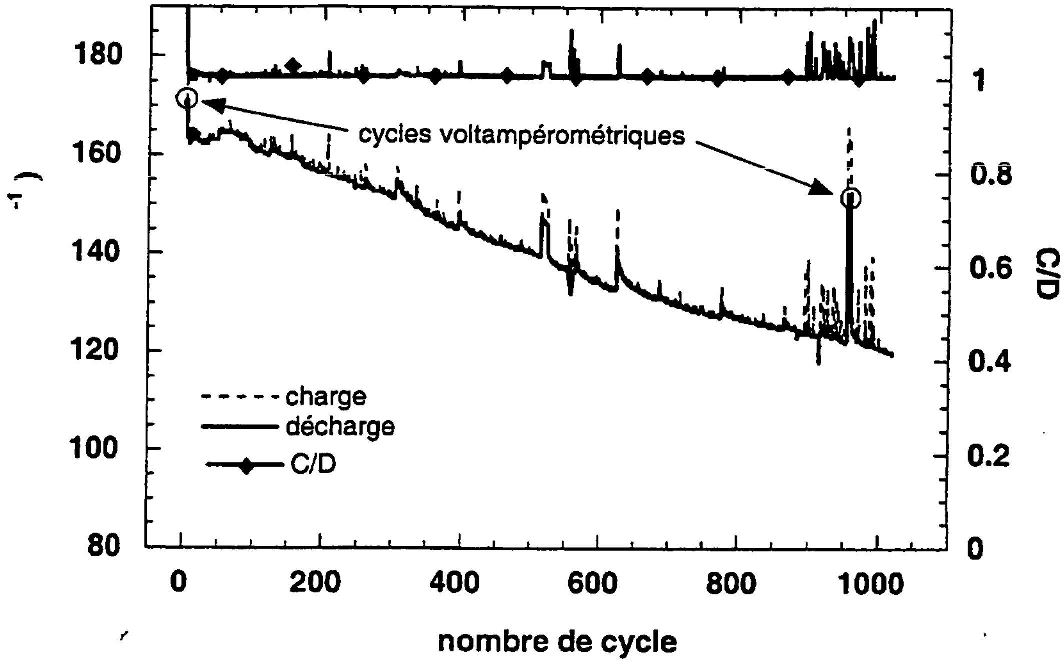
180
160
140
120
100
80
-1 )
cycles voltampérométriques
charge
décharge
C/D
0
200
400
600
800
1000
nombre de cycle
1
0.8
0.6
0.4
0.2
0
C/D

Figure 5

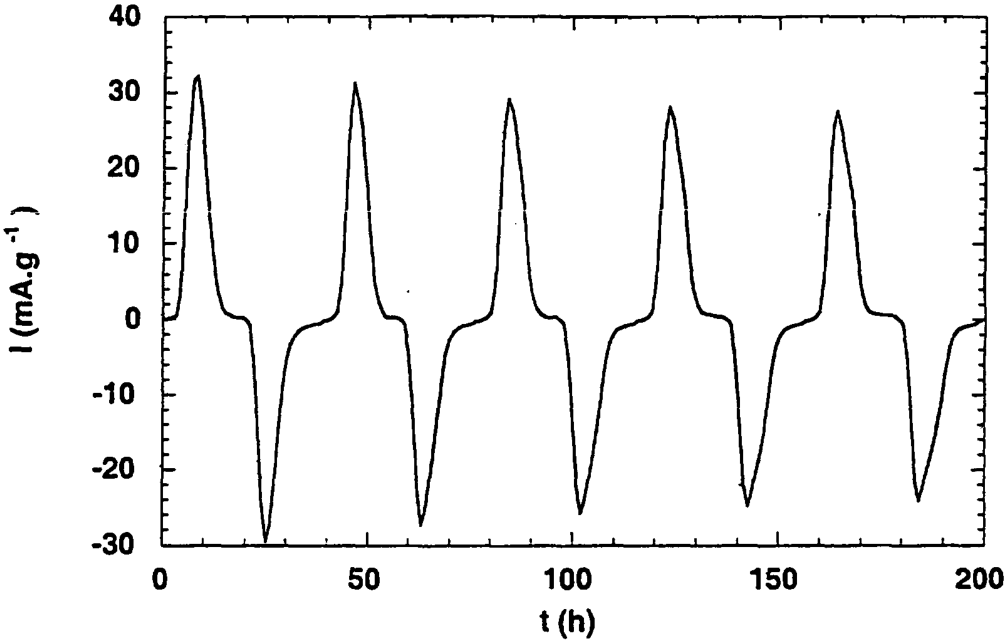


Figure 6

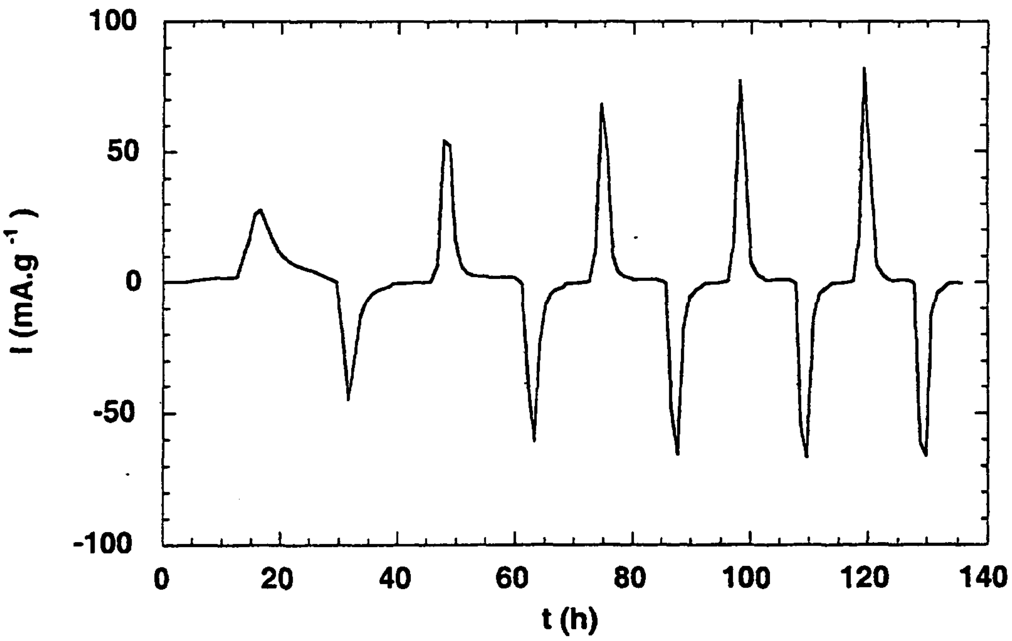


Figure 7

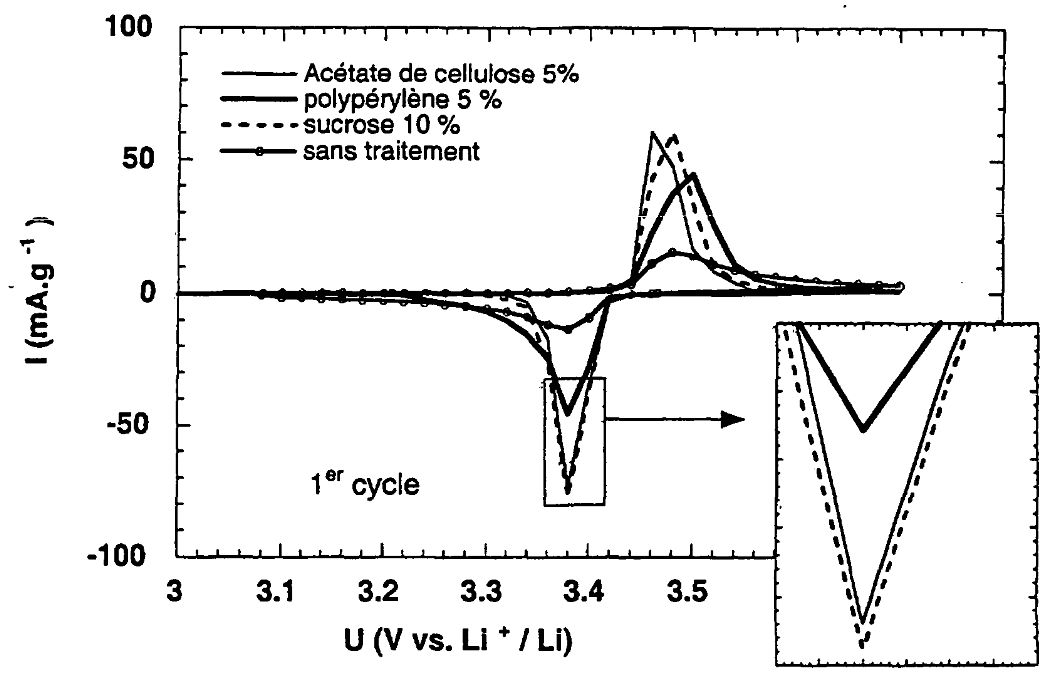


Figure 8

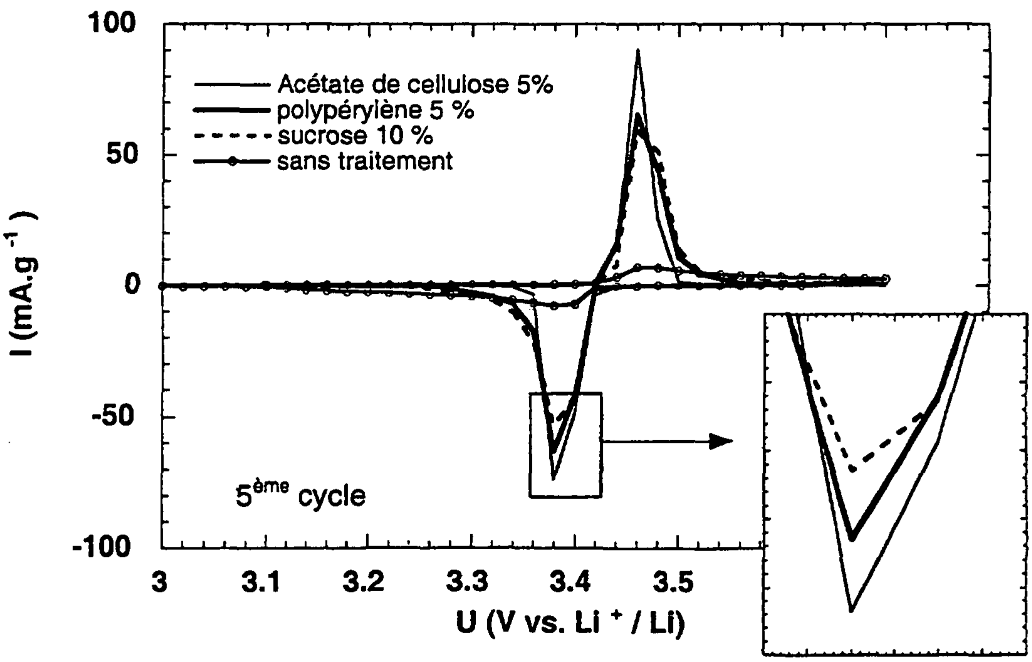


Figure 9

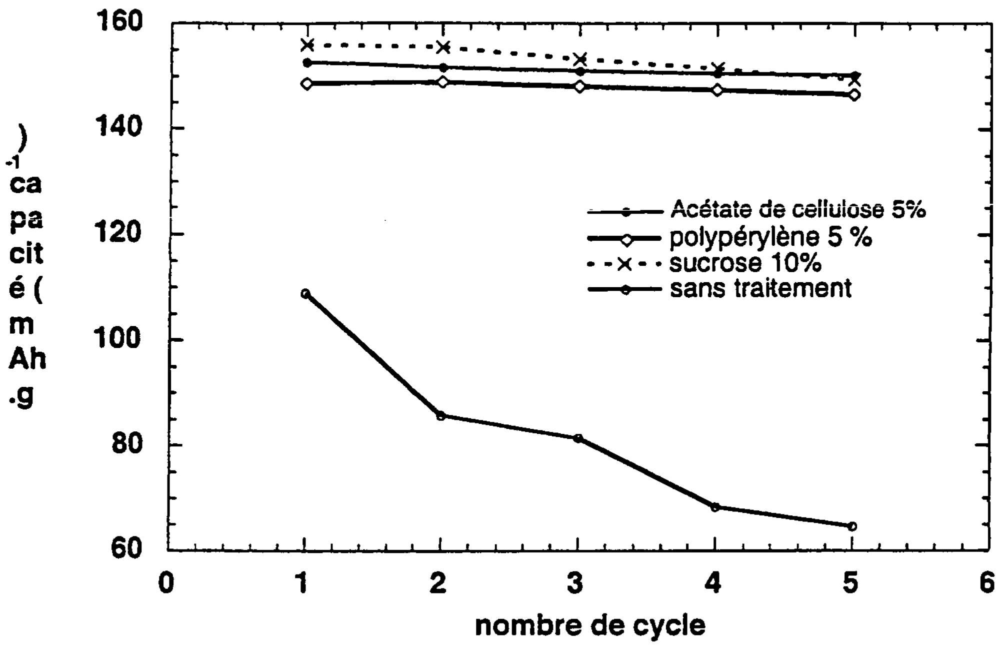
capacité (mAh.g-1)
160
140
120
100
80
60
0
1
2
3
4
5
6
nombre de cycle
Acétate de cellulose 5%
polypérylène 5 %
sucrose 10%
sans traitement

Figure 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 0612117 A
- US 5789114 A


### Littérature non-brevet citée dans la description


- *PATENT ABSTRACTS OF JAPAN,* vol. 015, 383
- *J. Electrochem. Soc.,* 1994, vol. 141 (7), 1915